# EUROPEAN PATENT SPECIFICATION

(11) **EP 2 475 194 B1**
(45) Date of publication and mention of the grant of the patent: **19.12.2018**
(21) Application number: 10811116.2
(22) Date of filing: 31.08.2010
(51) Int. Cl.: H04W 12/06, H04L 12/24, H04L 29/06

(54) **SERVICE ACCESS METHOD, SYSTEM AND DEVICE BASED ON WLAN ACCESS AUTHENTICATION**
DIENSTZUGANGSVERFAHREN, -SYSTEM UND VORRICHTUNG AUF BASIS VON WLAN-ZUGANGSAUTHENTIFIKATIONEN
PROCÉDÉ, SYSTÈME ET DISPOSITIF D'ACCÈS AU SERVICE BASÉ SUR UNE AUTHENTIFICATION D'ACCÈS AU RÉSEAU LOCAL SANS FIL WLAN

(30) Priority: 31.08.2009 CN 200910169685; 31.08.2009 CN 200910169686
(43) Date of publication of application: 11.07.2012
(73) Proprietor: China Mobile Communications Corporation, Beijing 100032 (CN)
(72) Inventor: LIU, Lijun, Beijing 100032 (CN); WANG, Jing, Beijing 100032 (CN); LAN, Jianming, Beijing 100032 (CN); SHAO, Chunju, Beijing 100032 (CN); DUAN, Xiang, Beijing 100032 (CN); WEI, Bing, Beijing 100032 (CN)
(74) Representative: Körfer, Thomas
(86) International application number: PCT/CN2010/001327
(87) International publication number: WO 2011/022950

(56) References cited:
- WO-A1-03/073783
- WO-A2-2005/065132
- CN-A- 1 855 814
- CN-A- 101 399 724
- DE-B3-102006 007 793
- US-A1- 2008 228 919

## Description

### Field

The present invention relates to the field of radio communications and particularly to a service access method, system and device based upon Wireless local Area Network (WLAN) access authentication.

### Background

As radio communication technologies have been developed and the infomationization extent of the society has been improved, there are an increasing number of access demands for an application system providing a value-added service via a WLAN on one hand and also an increasing number of application systems capable of providing a service access on the other hand.

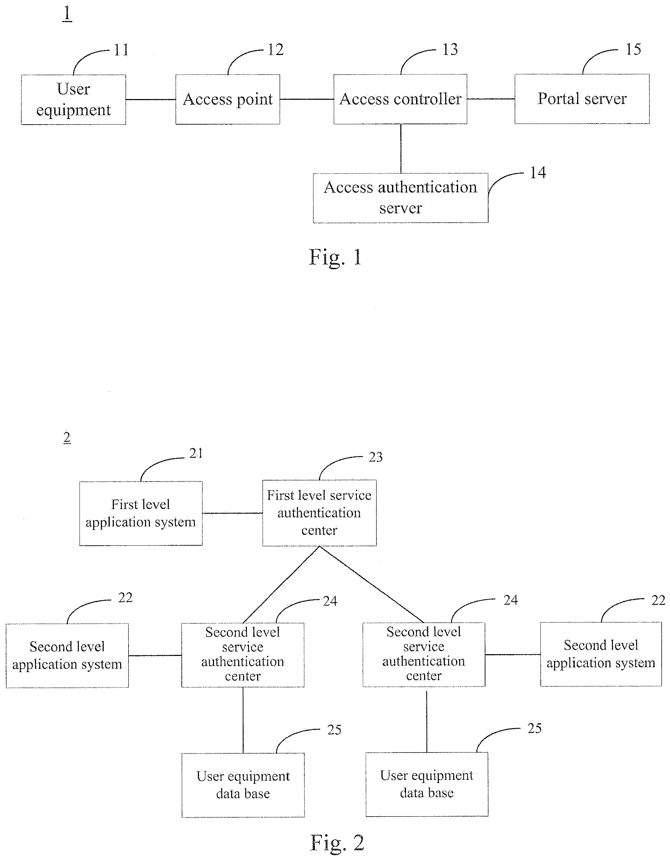

Fig. 1 illustrates a structure of a WLAN access authentication system 1 which may include a user equipment 11, an Access Point (AP) 12, an Access Controller (AC) 13, an access authentication server 14 and a portal server 15. In the system 1, the access point 12 can provide a radio access of the user equipment 11. The access controller 13 controls an access of the user equipment 11 to a WLAN. The access controller 13, the access authentication server 14 and the portal server 15 cooperate to perform access authentication on the user equipment 11. This WLAN access authentication method has been detailed in the pending Chinese Patent Application No. 200610169785.0 (Publication No. CN 101212297 A) of the present applicant.

Fig. 2 illustrates a single-site login system 2 which enables a user equipment to access services of a plurality of application systems through one service authentication process. The system 2 may include application systems, service authentication centers and user equipment databases. The application systems may be divided into a first level application system 21 and a second level application system 22 which are associated respectively with a first level service authentication center 23 and a second level service authentication center 24. The application system can acquire a desired user equipment identity token through an associated service authentication center and provide a user equipment with a service access according to the user equipment identity token. Each second level service authentication center 24 is associated with a user equipment database 25 in which a plurality of user equipment information are recorded. This single-site login system has been detailed in the unpublished Chinese Patent Application No. 200810116578.8 of the present applicant.

However since WLAN access authentication is separate from service authentication of the single-site login system, the user equipment which has passed WLAN access authentication has to perform at least one service authentication process to access a service provided from an application system. Such repeated authentication hinders the experience of a user and also increases an overhead of the application system because the system has to maintain user equipment data desired for service authentication.
Document WO 03073783 A1 provides a system, method and apparatus wherein a cellular Federation of mobile network operators becomes an SSO authentication authority for subscribers of this Federation accessing Service Providers having such agreement with a mobile network pperator of the Federation.
Document US 2008228919 A1 discloses a method, which includes establishing a persistent session with one or more network management servers, where each persistent session is identified relative to a session identifier, authenticating one or more clients requesting access; receiving, from a client, a request to access a selected network management server of the one or more network management servers; generating a ticket for the client; and transmitting a redirection message to the client, where the redirection message identifiers the selected network management server and includes the ticket and the session identifier corresponding to the selected network management server.
Document DE 10 2006 007793 B3 discloses a method which involves accomplishing a user authentication between a client device and an Internet gateway, via hypertext transfer protocol (HTTP) or hypertext mark up language (HTML). Appropriate status information is installed on the device by the gateway. An access is granted for the user after the authentication. The information is transmitted from the device to the gateway that checks the information, where an HTTP redirect is transmitted on a web page that is requested by the client device, with a positive result. A re-authentication is required by the device with a negative result.

### Summary

In order to overcome the foregoing problem of repeated authentication in the prior art, there is provided a method having the features of claim 1, a system having the features of claim 8 and devices having the features of claims 9 and 14. Advantageous embodiments thereof are defined in the respective dependent claims.

With the foregoing method, the user equipment which has passed WLAN access authentication can access services provided from a plurality of application systems without any service authentication, thereby improving the experience of a user and alleviating a system overhead of the application systems.

### Brief Description of the Drawings

Fig. 1 is a schematic structural diagram of a WLAN access authentication system;
Fig. 2 is a schematic structural diagram of a single-site login system;
Fig. 3 is a flow chart of a service access method based upon WLAN access authentication according to a first implementation solution of the invention;
Fig. 4 is a flow chart of a service access method based upon WLAN access authentication according to a second implementation solution of the invention;
Fig. 5 is a flow chart of a service access method based upon WLAN access authentication according to a third implementation solution of the invention;
Fig. 6 is a flow chart of a service access method based upon WLAN access authentication according to a fourth implementation solution of the invention;
Fig. 7 is a flow chart of a service access method based upon WLAN access authentication according to a fifth embodiment of the invention;
Fig. 8 is a process flow chart of a service access method based upon WLAN access authentication in an illustrative application scenario according to the invention;
Fig. 9 is a process flow chart of a service access method based upon WLAN access authentication in another illustrative application scenario according to the invention;
Fig. 10 is a flow chart of a service access method based upon WLAN access authentication according to a first implementation solution of the invention;
Fig. 11 is a flow chart of a service access method based upon WLAN access authentication according to a second implementation solution of the invention;
Fig. 12 is a flow chart of a service access method based upon WLAN access authentication according to a third implementation solution of the invention;
Fig. 13 is a flow chart of a service access method based upon WLAN access authentication according to a fourth implementation solution of the invention;
Fig. 14 is a process flow chart of a service access method based upon WLAN access authentication in a specific application scenario according to the invention;
Fig. 15 is a schematic structural diagram of a service access system based upon Wireless Local Area Network (WLAN) access authentication according to the invention;
Fig. 16 is a schematic structural diagram of a service access device based upon Wireless Local Area Network (WLAN) access authentication according the invention; and
Fig. 17 is a schematic structural diagram of another service access device based upon Wireless Local Area Network (WLAN) access authentication according to the invention.

### Detailed Description

According to the invention, when a user equipment initiates a request to access a service of an application system, if the user equipment has passed WLAN access authentication, then the application system can acquire a user equipment identity token through a service authentication center associated with the user equipment and provide the user equipment with a service access according to the user equipment identity token without any service authentication. Those skilled in the art can appreciate that the user equipment identity token is information desired for the application system to provide the user equipment with the service access, e.g., a Mobile Station international ISDN number (MSISDN) of the user equipment, charge information, etc.

In an existing WLAN access method, a portal server can transmit an access authentication result page to a user equipment. According to an embodiment of the invention, the portal server can transmit a cookie to the user equipment in addition to the access authentication result page transmitted to the user equipment which has passed WLAN access authentication. The cookie is a text file stored at the user equipment, and the contents of the cookie transmitted from the portal server to the user equipment can include a user equipment identifier and an access authentication pass indication. In embodiments of the invention, the user equipment identifier is an identification code which can identify uniquely the identity of the user equipment, e.g., the MSISDN of the user equipment, etc. The access authentication pass indication can be various pieces of information which can indicate that the user equipment has passed WLAN access authentication, the identifier of the portal server (e.g., the name or address of the portal server, etc.) as a non-limiting example. As can be appreciated, the portal server can transmit the cookie together with the access authentication result page to the user equipment or transmit the cookie separately to the user equipment before or after the access authentication result page is transmitted.

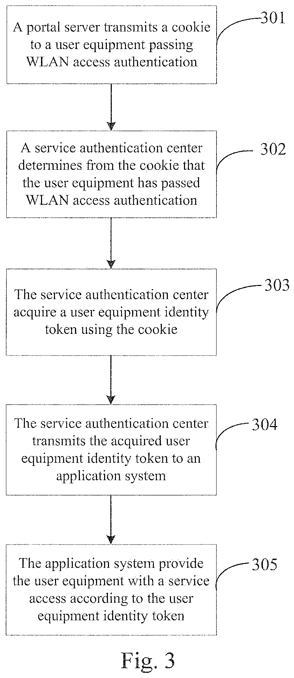

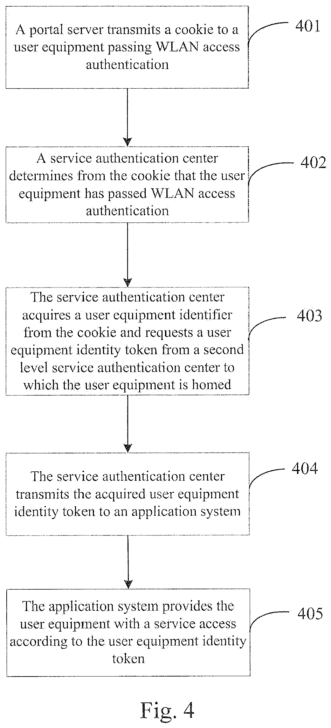

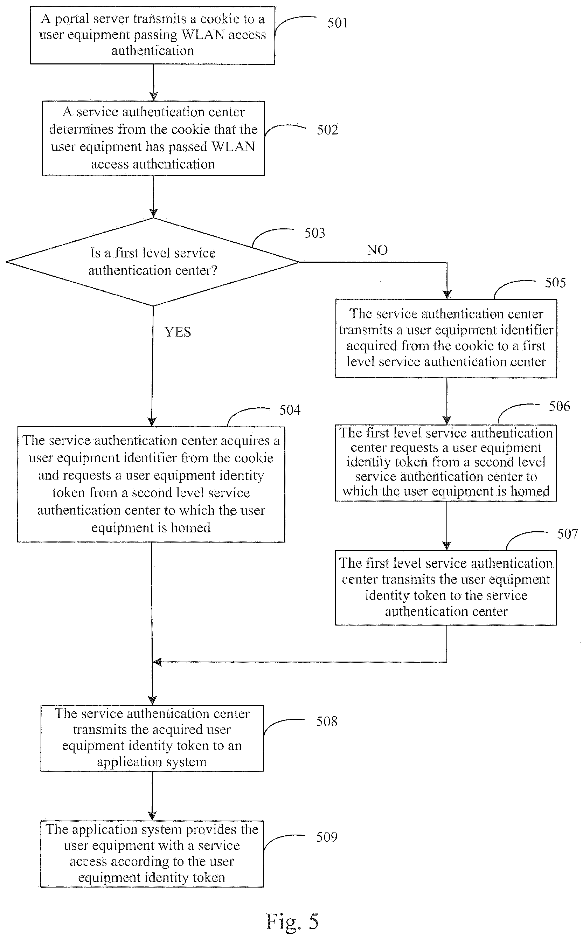

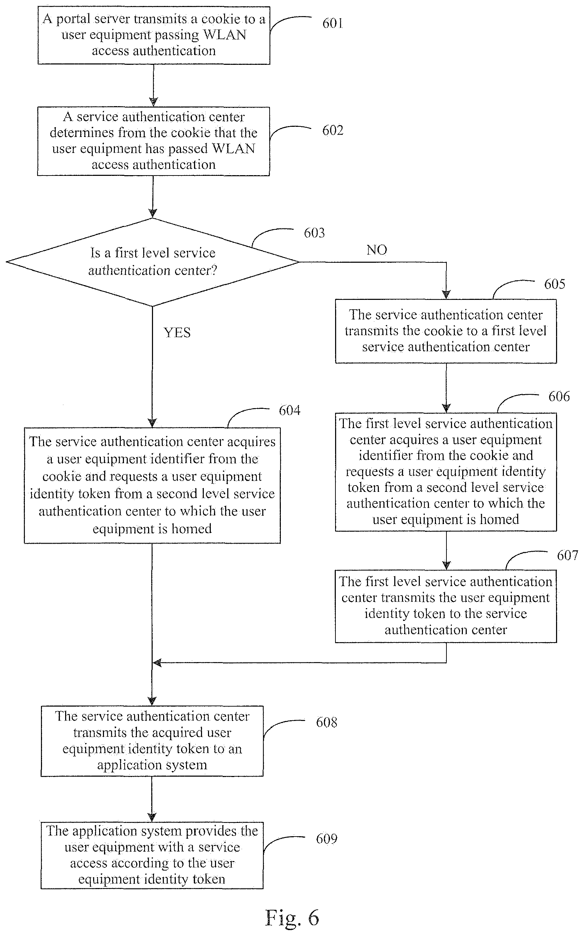

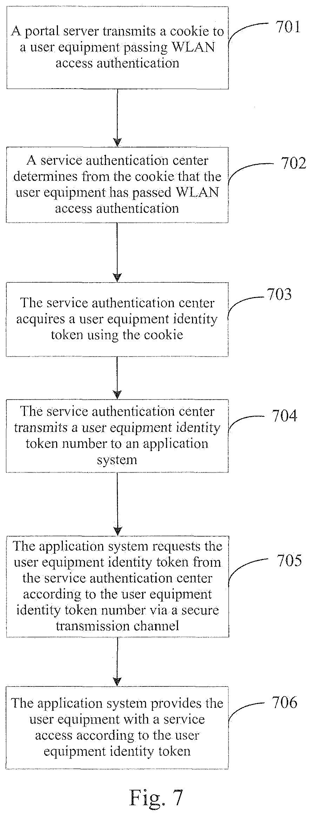

A service access method based upon WLAN access authentication according to the invention will be described below with reference to Fig. 3 to Fig. 7, where a system providing a service access is in the two-level architecture as illustrated in Fig. 2. The first operation of the method illustrated in Fig. 3 to Fig. 7 (the operation 301 in Fig. 3, the operation 401 in Fig. 4, the operation 501 in Fig. 5, the operation 601 in Fig. 6 and the operation 701 in Fig. 7) can be the operation as described above in which a portal server transmits a cookie to a user equipment which has passed WLAN access authentication. As can be appreciated, after the user equipment transmits a service access request to an application system, the application system can check whether there is a user equipment identity token present therein, and if so, then the application system can provide the user equipment directly with a service access. Therefore respective operations following the first operation in the method as illustrated in Fig. 3 to Fig. 7 in which the portal server transmits the cookie to the user equipment which has passed WLAN access authentication will be performed only in the case that the user equipment identity token of the user equipment requesting the service access is absent in the application system.

In the method according to a first implementation solution of the invention as illustrated in Fig. 3, when the user equipment initiates a request to access a service of an application system after the operation 301, a service authentication center associated with the application system can determine from the cookie in the user equipment whether the user equipment has passed WLAN access authentication (the operation 302). At this time the application system redirects the service access request to the service authentication center associated with the application system. For example, if the user equipment is to access a service of a first level application system, then a first level service authentication center determines whether the user equipment has passed WLAN access authentication; or if the user equipment is to access a service of a second level application system, then a second level service authentication center associated with the second level application system determines whether the user equipment has passed WLAN access authentication. As described above, the portal server has transmitted the cookie including a user equipment identifier and an access authentication pass indication to the user equipment which has passed WLAN access authentication during WLAN access authentication of the user equipment, thus the service authentication center can determine from the access authentication pass indication included in the cookie in the user equipment that the user equipment has passed WLAN access authentication.

Then the service authentication center can acquire a desired user equipment identity token using the cookie (the operation 303). The service authentication center transmits the user equipment identity token to the application system upon reception thereof (the operation 304), and the application system can provide the user equipment with a service access according to the user equipment identity token (the operation 305). As can be appreciated, alternatively in the operation 304 in which the service authentication center transmits the user equipment identity token to the application system, the service authentication center can firstly transmit the user equipment identity token to the user equipment which in turn transmits it to the application system so that the application can provide the user equipment with the desired service access.

In a second implementation solution of the invention as illustrated in Fig. 4, a portal server transmits a cookie to a user equipment which has passed WLAN access authentication in the operation 401. After a service authentication center determines from the cookie in the user equipment that the user equipment has passed WLAN access authentication (the operation 402), the service authentication center can acquire a user equipment identity token using the cookie in such a way that the service authentication center can acquire a user equipment identifier from the cookie and request the user equipment identity token from a second level service authentication center to which the user equipment is homed according to the user equipment identifier (the operation 403). The service authentication center transmits the user equipment identity token to an application system upon reception thereof (the operation 404). The application system can provide the user equipment with a service access according to the user equipment identity token (the operation 405).

As described above, each second level service authentication center is associated with a user equipment database in which information of user equipments is recorded. In embodiments of the invention, a user equipment being "homed" to a specific second level service authentication center refers to that information of the user equipment is recorded in a user equipment database associated with the second level service authentication center. The service authentication center will firstly determine which second level service authentication center the user equipment is homed to before the user equipment identity token is requested from the second level service authentication center to which the user equipment is homed, and the service authentication center can determine the second level service authentication center, to which the user equipment is homed, according to the user equipment identifier acquired from the cookie in various existing methods, none of which will be detailed in the invention for the sake of brevity. The service authentication center transmits the user equipment identifier to the second level service authentication center, to which the user equipment is homed, to request the user equipment identity token, and thus the second level service authentication center to which the user equipment is homed can acquire the corresponding user equipment identity token according to the user equipment identifier and transmit it to the service authentication center. Those skilled in the art can appreciate that the second level service authentication center to which the user equipment is homed can search the user equipment database associated therewith for the user equipment identity token according to the user equipment identifier in various existing methods, none of which will be further described here.

Optionally the user equipment identity token can be stored at the service authentication center. Thus in the operation 403 illustrated in Fig. 4, the service authentication center can firstly determine whether the user equipment identity token corresponding to the user equipment identifier is stored locally after acquiring the user equipment identifier from the cookie, and if not, then the service authentication center will request the user equipment identity token from the second level service authentication center to which the user equipment is homed according to the user equipment identifier; otherwise, the process of requesting the user equipment identity token from the second level service authentication center to which the user equipment is homed can be omitted. For example, a table of user equipment identity tokens, in which user equipment identity tokens are stored, can be configured at the service authentication center. As can be appreciated, each user equipment identity token can be indexed with a user equipment identifier in the table of user equipment identity tokens. Stated otherwise, correspondence relationships between user equipment identifiers and user equipment identity tokens can be recorded in the table of user equipment identity tokens. Therefore the service authentication center can search the table of user equipment identity tokens for the corresponding user equipment identity token according to the user equipment identifier.

In order to improve the security, the cookie transmitted from the portal server to the user equipment can include an encrypted user equipment identifier, and thus the service authentication center shall acquire the user equipment identifier only after the encrypted user equipment identifier in the cookie is decrypted. Those skilled in the art can encrypt and decrypt the user equipment identifier in various cipher systems. In a specific embodiment, a symmetric cipher algorithm can be adopted, that is, the portal server and the service authentication center share a key Ka. Specifically the cookie in the user equipment which has passed WLAN access authentication includes a cipher text generated by the portal server encrypting the user equipment identifier with the key Ka, and the service authentication center acquires the correct user equipment identifier after the encrypted user equipment identifier is decrypted with the key Ka upon acquisition of the cookie. Various symmetric cipher algorithms can be adopted, e.g., the DES algorithm, the 3-DES algorithm, the AES algorithm, etc. In another specific embodiment, an asymmetric cipher algorithm can be adopted, that is, the cookie in the user equipment which has passed WLAN access authentication includes a cipher text generated by the portal server encrypting the user equipment identifier with a public key Kp, and the service authentication center can decrypt the encrypted user equipment identifier with its private key Ks upon acquisition of the cookie. Various asymmetric cipher algorithms can be adopted, e.g., the RSA algorithm, the ElGmal algorithm, the ECC algorithm, etc.

As can be appreciated, a replay attack may still occur although the security can be improved to some extent because the user equipment identifier is added to the cookie after being encrypted. For this reason, the service authentication center can store the user equipment identifier after the user equipment identifier is acquired from the cookie and allocate a user equipment identifier index to each user equipment identifier in an embodiment of the invention. In this case, the service authentication center can transmit a rewritten cookie to the user equipment to replace the cookie provided previously from the portal server, and the rewritten cookie can include the identifier of the service authentication center (e.g., the name or address of the service authentication center, etc.) and the user equipment identifier index corresponding to the user equipment identifier. As described above, the service authentication center can firstly transmit the user equipment identity token to the user equipment which in turn transmits it to the application system, in the operation in which the service authentication center transmits the user equipment identity token to the application system. Therefore the rewritten cookie can be transmitted to the user equipment to replace the original cookie while the service authentication center transmits the user equipment identity token to the application system via the user equipment. Thus when the user equipment requests to access a service of another application system, a service authentication center associated with the other application system can transmit the user equipment identifier index included in the rewritten cookie to the service authentication center represented by the identifier of the service authentication center included in the rewritten cookie according to the identifier of the service authentication center and the user equipment identifier index, and the service authentication center represented by the identifier of the service authentication center acquires the corresponding user equipment identifier according to the user equipment identifier index to thereby acquire the desired user equipment identity token. In the case as described above that the table of user equipment identity tokens, in which user equipment identity tokens are stored, is created in the service authentication center, the table of user equipment identity tokens can be modified by including therein a table entry in which the user equipment identifier index corresponding to the user equipment identifier is recorded. Thus the service authentication center represented by the identifier of the service authentication center in the rewritten cookie can search the table of user equipment identity tokens according to the user equipment identifier index, and if no corresponding user equipment identity token is found, then the service authentication center can acquire the corresponding user equipment identifier from the table of user equipment identity tokens and acquire the desired user equipment identity token according to the user equipment identifier. In this way, the cookie including the user equipment identifier will be used once only if it is the first time for the user equipment to request a service access after which has passed WLAN access authentication to thereby avoid a replay attack.

As can be appreciated, secure transmission channels can be established between the service authentication center and the second level service authentication center to which the user equipment is homed and between the service authentication center and the associated application system for transmission of the user equipment identifier and/or the user equipment identity token. As an example, the secure transmission channels can be a Virtual Private Network (VPN), e.g., an SSL secure tunnel, etc.

Fig. 5 and Fig. 6 illustrates a service access method based upon WLAN access authentication in a third implementation solution and a fourth implementation solution of the invention, where a second level service authentication center requests via a first level service authentication center a user equipment identity token from a second level service authentication center to which a user equipment is homed instead of requesting the user equipment identity token directly from the second level service authentication center to which the user equipment is homed, and this can avoid a mesh access condition due to interconnectivity between the different second level service authentication centers and hence avoid possible information congestion.

Specifically a portal server transmits a cookie to a user equipment which has passed WLAN access authentication (the operation 501 in Fig. 5 and the operation 601 in Fig. 6), and a service authenticator center determines from the cookie in the user equipment that the user equipment has passed WLAN access authentication (the operation 502 in Fig. 5 and the operation 602 in Fig. 6). Thereafter it can be determined whether the level of the service authenticator center is a first level or a second level (the operation 503 in Fig. 5 and the operation 603 in Fig. 6). If the service authentication center is determined as a first level service authentication center, then the first level service authentication center acquires a user equipment identifier from the cookie and requests a user equipment identity token from a second level service authentication center to which the user equipment is homed according to the user equipment identifier (the operation 504 in Fig. 5 and the operation 604 in Fig. 6). If the service authentication center is determined as a second level service authentication center, then a process of the method illustrated in Fig. 5 is slightly different from that of the method illustrated in Fig. 6.

In the case that the service authentication center is determined as a second level service authentication center, as illustrated in Fig. 5, the second level service authentication center transmits a user equipment identifier to a first level service authentication center after the user equipment identifier is acquired from the cookie (the operation 505), and the first level service authentication center requests a user equipment identity token from a second level service authentication center to which the user equipment is homed according to the user equipment identifier (the operation 506) and transmits the user equipment identity token to the second level service authentication center requesting the user equipment identity token (the operation 507). And as illustrated in Fig. 6, the second level service authentication center transmits the cookie to a first level service authentication center (the operation 605), and the first level service authentication center acquires a user equipment identifier from the cookie and requests a user equipment identity token from a second level service authentication center to which the user equipment is homed according to the user equipment identifier (the operation 606) and transmits the user equipment identity token to the second level service authentication center requesting the user equipment identity token (the operation 607). As can be apparent, the second level service authentication center is responsible for acquiring the user equipment identifier from the cookie in the method illustrated in Fig. 5, and the first level service authentication center acquires the user equipment identifier from the cookie in the method illustrated in Fig. 6.

The service authentication center will perform the same process of the method illustrated in Fig. 5 as that of the method illustrated in Fig. 6 upon reception of the user equipment identity token in that the service authentication center transmits the user equipment identity token to an application system (the operation 508 in Fig. 5 and the operation 608 in Fig. 6), and the application system can provide the user equipment with a service access according to the user equipment identity token (the operation 509 in Fig. 5 and the operation 609 in Fig. 6).

Alternatively the user equipment identity token can be stored and also a table of user equipment identity tokens, in which correspondence relationships between user equipment identifiers and user equipment identity tokens are recorded, can be created at the service authentication center. Thus if the service authentication center is determined as a first level service authentication center in the operation 503 illustrated in Fig. 5 or the operation 603 illustrated in Fig. 6, then the first level service authentication center can firstly determine whether the desired user equipment identity token is stored locally at the first level service authentication center after the user equipment identifier is acquired from the cookie, and if not, then the service authentication center can request the user equipment identity token from the second level service authentication center to which the user equipment is homed according to the user equipment identifier; otherwise, the process of requesting the user equipment identity token from the second level service authentication center to which the user equipment is homed can be omitted. On the other hand, in the case that the service authentication center is a second level service authentication center, in the method illustrated in Fig. 5, the second level service authentication center can determine whether the desired user equipment identity token is stored locally after the user equipment identifier is acquired from the cookie, and if so, then the subsequent process in which the first level service authentication center requests the user equipment identity token from the second level service authentication center to which the user equipment is homed can be omitted; and in the method illustrated in Fig. 6, the first level service authentication center determines whether the desired user equipment identity token is stored at the first level service authentication center after the user equipment identifier is acquired from the cookie received from the second level service authentication center, and if so, then the process of requesting the user equipment identity token from the second level service authentication center to which the user equipment is homed can be omitted.

Similarly a secure transmission channel can also be established for transmission of the user equipment identifier and/or the user equipment identity token. As an example, the secure transmission channel can be a VPN, e.g., an SSL secure tunnel, etc.

In an embodiment, the cookie transmitted from the WLAN portal server to the user equipment can include an encrypted user equipment identifier. As can be appreciated, in the case that the user equipment identifier is encrypted, the first level service authentication center acquires the user equipment identifier from the cookie in the method illustrated in Fig. 6, thus it is not necessary for the second level service authentication center to store a key Ka (a symmetric encryption algorithm) or a private key Ks (an asymmetric encryption algorithm) required for decryption, and thus the amount of stored data and the amount of computation of the second level service authentication center can be lowered.

As can be appreciated, the method illustrated in Fig. 5 and Fig. 6 can further include the operation in which the service authentication center transmits a rewritten cookie to the user equipment to replace the cookie provided previously from the portal server, where the rewritten cookie can include the identifier of the service authentication center and a user equipment identifier index corresponding to the user equipment identifier. It shall be noted that in the method illustrated in Fig. 6, if the service authentication center is a second level authentication center, then the first level service authentication center can alternatively transmit the user equipment identifier to the second level service authentication center when the user equipment identifier token is transmitted to the second level service authentication center although the first level service authentication center acquires the user equipment identifier from the cookie. Therefore the service authentication center can store the user equipment identifier and allocate a user equipment identifier index to each user equipment identifier after the user equipment identifier is acquired.

In the method described above with reference to Fig. 3 to Fig. 6, the service authentication center transmits the user equipment identifier token to the application system upon acquisition thereof. As an alternative, in the case that the service authentication center can configure, for example, a table of user equipment identifier tokens in which acquired user equipment identifier tokens are stored, the service authentication center can set a corresponding user equipment identifier token number for each stored user equipment identifier token. Fig. 7 illustrates the method in this implementation, after the operation 701 in which a portal server transmits a cookie to a user equipment which has passed WLAN access authentication, the operation 702 in which a service authentication center determines from the cookie in the user equipment that the user equipment has passed WLAN access authentication and the operation 703 in which the service authentication center acquires a user equipment identity token, the service authentication center stores the user equipment identity token, for example, in a table of user equipment identity tokens instead of transmitting the user equipment identity token directly to an application system and sets a corresponding user equipment identity token number thereof. Therefore the service authentication center transmits the user equipment identity token number to the application system (the operation 704) instead of transmitting the user equipment identity token directly. The application system establishes a secure transmission channel with the service authentication center upon reception of the user equipment identity token number and provides the service authentication center with the user equipment identity token number, and the service authentication center searches the table of user equipment identity tokens for the corresponding user equipment identity token and further transmits the user equipment identity token to the application system via the secure transmission channel (the operation 705). As an example, a VPN, e.g., an SSL secure tunnel, etc., can be established between the service authentication center and the application system for transmission of the user equipment identity token. The application system can provide the user equipment with a service access according to the user equipment identity token after the user equipment identity token is acquired (the operation 706).

As described previously, the service authentication center can transmit the user equipment identity token to the application system via the user equipment so that the application system can provide the user equipment with the desired service access. However the security of a transmission channel between the service authentication center and the user equipment and a transmission channel between the user equipment and the application system is typically poor, thus transmission of the user equipment identity token may result in such a potential security risk that the user equipment identity token may be stolen. In the method illustrated in Fig. 7, the service authentication center transmits only the user equipment identity token number to the application system via the user equipment, and the user equipment identity token is transmitted on the secure transmission channels, thereby improving the security.

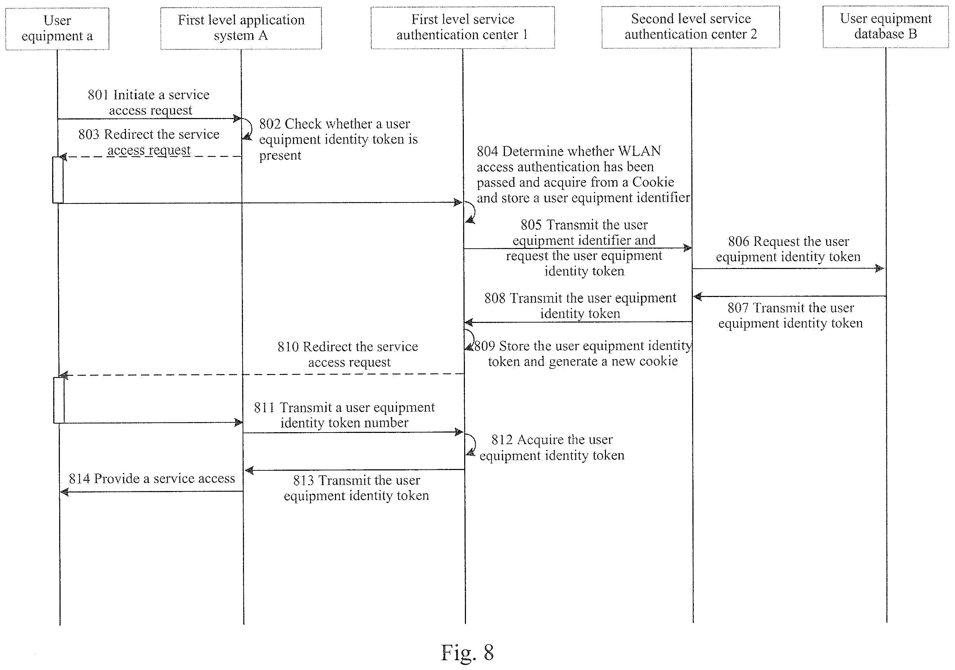

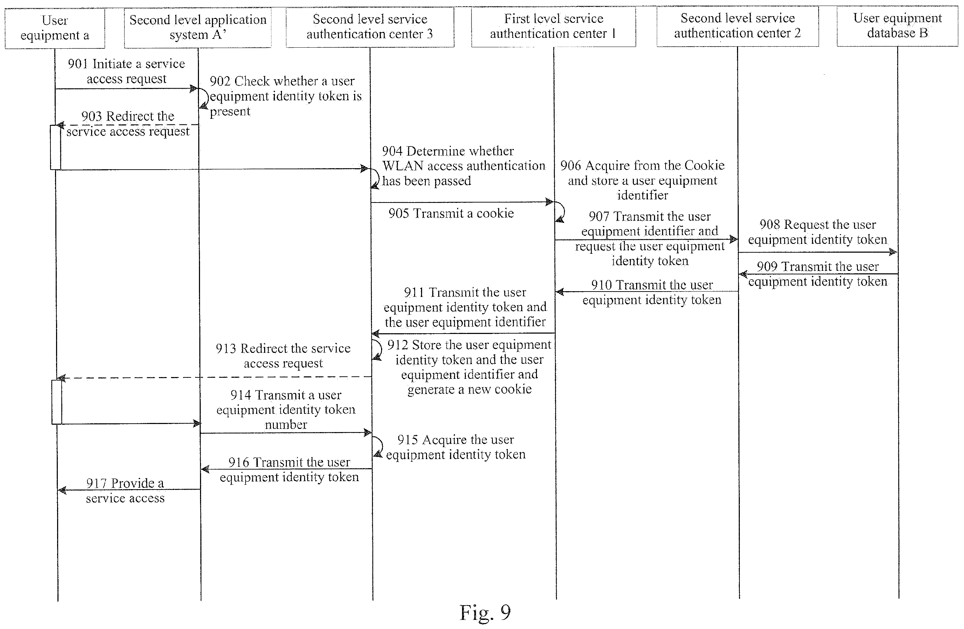

In order to facilitate understanding, a specific process of the service access method based upon WLAN access authentication according to an embodiment of the invention will be described below in two specific application scenarios with reference to Fig. 8 and Fig. 9.

Fig. 8 represents an illustrative scenario in which a user equipment 'a' which has passed WLAN access authentication accesses a first level application system A, where the first level application system A is associated with a first level service authentication center 1, and a second level service authentication center 2 is associated with a user equipment database B in which information of the user equipment 'a' is recorded, that is, the user equipment 'a' is homed to the second level service authentication center 2. During WLAN access authentication of the user equipment 'a', a WLAN portal server transmits a cookie including an access authentication pass indication and an encrypted user equipment identifier to the user equipment 'a' which has passed WLAN access authentication. Fig. 8 illustrates the following process flow:
Operation 801: The user equipment 'a' initiates a service access request to the first level application system A;
Operation 802: The first level application system A checks whether a user equipment identity token of the user equipment 'a' is present, and if so, then the flow jumps to the operation 814;
Operation 803: The first level application system A redirects the service access request of the user equipment 'a' to the first level service authentication center 1;
Operation 804: The first level service authentication center 1 determines whether the user equipment 'a' has passed WLAN access authentication according to whether the cookie in the user equipment 'a' includes the access authentication pass indication, and if so, then the first level service authentication center 1 decrypts the encrypted user equipment identifier in the cookie, acquires the user equipment identifier, stores the user equipment identifier and sets a corresponding user equipment identifier index thereof; otherwise, the first level service authentication center 1 performs WLAN access authentication of the user equipment 'a';
Operation 805: The first level service authentication center 1 establishes a secure transmission channel to the second level service authentication center 2 and transmits the user equipment identifier to the second level service authentication center 2 to request the user equipment identity token;
Operation 806: The second level service authentication center 2 transmits a user equipment identity token request to the user equipment database B;
Operation 807: The user equipment database B transmits the user equipment identity token to the second level service authentication center 2;
Operation 808: The second level service authentication center 2 transmits the user equipment identity token to the first level service authentication center 1 on the secure transmission channel established in the operation 805;
Operation 809: The first level service authentication center 1 stores the user equipment identity token, sets a user equipment identity token number for the user equipment identity token and generates a new cookie including the identifier of the first level service authentication center 1 and the user equipment identifier index;
Operation 810: The first level service authentication center 1 redirects the service access request of the user equipment 'a' to the first level application system A, here by transmitting the user equipment identity token number to the first level application system A, and transmits the new cookie to the user equipment 'a' to replace the cookie provided previously from the portal server;
Operation 811: The first level application system A establishes a secure transmission channel with the first level service authentication center 1 and transmits the user equipment identity token number to the first level service authentication center 1 to request the user equipment identity token;
Operation 812: The first level service authentication center 1 acquires the user equipment identity token according to the user equipment identity token number;
Operation 813: The first level service authentication center 1 transmits the user equipment identity token to the first level application system A on the secure transmission channel established in the operation 811; and
Operation 814: The first level application system A provides the user equipment 'a' with a service access according to the user equipment identity token.

Fig. 9 represents an illustrative scenario in which a user equipment 'a' which has passed WLAN access authentication accesses a second level application system A', where the second level application system A' is associated with a second level service authentication center 3 which is associated with a first level service authentication center 1. A second level service authentication center 2 is associated with a user equipment database B in which information of the user equipment 'a' is recorded, that is, the user equipment 'a' is homed to the second level service authentication center 2. During WLAN access authentication of the user equipment 'a', a WLAN portal server transmits a cookie including an access authentication pass indication and an encrypted user equipment identifier to the user equipment 'a' which has passed WLAN access authentication. Fig. 9 illustrates the following process flow:
Operation 901: The user equipment 'a' initiates a service access request to the second level application system A';
Operation 902: The second level application system A' checks whether a user equipment identity token of the user equipment 'a' is present, and if so, then the flow jumps to the operation 917;
Operation 903: The second level application system A' redirects the service access request of the user equipment 'a' to the second level service authentication center 3;
Operation 904: The second level service authentication center 3 determines whether the user equipment 'a' has passed WLAN access authentication according to whether the cookie in the user equipment 'a' includes the access authentication pass indication, and if not, then the second level service authentication center 3 performs WLAN access authentication of the user equipment 'a';
Operation 905: The second level service authentication center 3 transmits the cookie to the first level service authentication center 1 to request the user equipment identify token from the first level service authentication center 1;
Operation 906: The first level service authentication center 1 decrypts the encrypted user equipment identifier in the cookie, acquires the user equipment identifier and stores the user equipment identifier;
Operation 907: The first level service authentication center 1 establishes a secure transmission channel to the second level service authentication center 2 and transmits the user equipment identifier to the second level service authentication center 2 to request the user equipment identity token;
Operation 908: The second level service authentication center 2 transmits a user equipment identity token request to the user equipment database B;
Operation 909: The user equipment database B transmits the user equipment identity token to the second level service authentication center 2;
Operation 910: The second level service authentication center 2 transmits the user equipment identity token to the first level service authentication center 1 on the secure transmission channel established in the operation 907;
Operation 911: The first level service authentication center 1 transmits the user equipment identity token and the user equipment identifier to the second level service authentication center 3;
Operation 912: The second level service authentication center 3 stores the user equipment identity token and the user equipment identifier, sets a user equipment identity token number for the user equipment identity token and a user equipment identifier index for the user equipment identifier and generates a new cookie including the identifier of the second level service authentication center 3 and the user equipment identifier index;
Operation 913: The second level service authentication center 3 redirects the service access request of the user equipment 'a' to the second level application system A', here by transmitting the user equipment identity token number to the second level application system A', and transmits the new cookie to the user equipment 'a' to replace the cookie provided previously from the portal server;
Operation 914: The second level application system A' establishes a secure transmission channel with the second level service authentication center 3 and transmits the user equipment identity token number to the second level service authentication center 3 to request the user equipment identity token;
Operation 915: The second level service authentication center 3 acquires the user equipment identity token according to the user equipment identity token number;
Operation 916: The second level service authentication center 3 transmits the user equipment identity token to the second level application system A' on the secure transmission channel established in the operation 914; and
Operation 917: The second level application system A' provides the user equipment a with a service access according to the user equipment identity token.

In the embodiment of the invention, when a user equipment initiates a request to access a service of a specific application system, if the user equipment has passed WLAN access authentication, then the application system can acquire a user equipment identity token through an associated service authentication center which can acquire the user equipment identity token through a WLAN portal server, and after the user equipment identity token of the user equipment is acquired, the application server can provide the user equipment with a service access according to the user equipment identity token without any service authentication. Again those skilled in the art can appreciate that the user equipment identity token is information desired for the application system to provide the user equipment with the service access, e.g., a Mobile Station international ISDN number (MSISDN) of the user equipment, charge information, etc.

Furthermore in an existing WLAN access method, a portal server can transmit an access authentication result page to a user equipment. According to an embodiment of the invention, the portal server can transmit a cookie to the user equipment in addition to the access authentication result page transmitted to the user equipment which has passed WLAN access authentication. The cookie is a text file stored at the user equipment, and the contents of the cookie transmitted from the portal server to the user equipment can include an access authentication pass indication which can be various pieces of information which can indicate that the user equipment has passed WLAN access authentication, the identifier of the WLAN portal server (e.g., the name or address of the portal server, etc.) as a non-limiting example. Furthermore the cookie transmitted from the portal server to the user equipment can further include a user equipment identifier index of the user equipment. In embodiments of the invention, the user equipment identifier can be an identification code which can identify uniquely the identity of the user equipment, e.g., the MSISDN of the user equipment, etc, and the user equipment identifier index refers to information from which the portal server can determine the user equipment identifier. In an embodiment, a table of user equipment identifiers, in which each user equipment identifier corresponds to one user equipment identifier index, is set in the portal server, and thus the portal server can search the table of user equipment identifiers for the corresponding user equipment identifier according to the user equipment identifier index. As can be appreciated, the portal server can acquire the user equipment identifier during WLAN access authentication of the user equipment, and thus the portal server can add the correspondence relationship between the user equipment identifier and the user equipment identifier index to the table of user equipment identifiers each time the user equipment identifier is acquired.

Therefore the cookie including the access authentication pass indication and the user equipment identifier index is stored in the user equipment which has passed WLAN access authentication. As can be appreciated, the portal server can transmit the cookie together with the access authentication result page to the user equipment or transmit the cookie separately to the user equipment before or after the access authentication result page is transmitted.

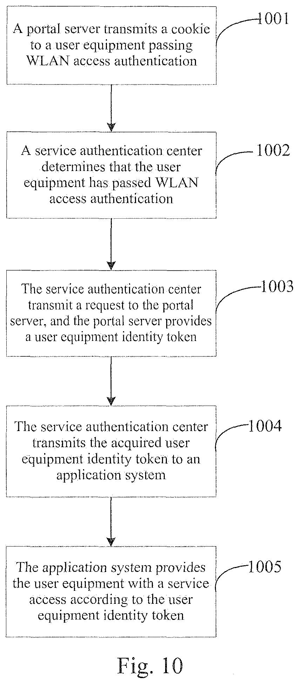

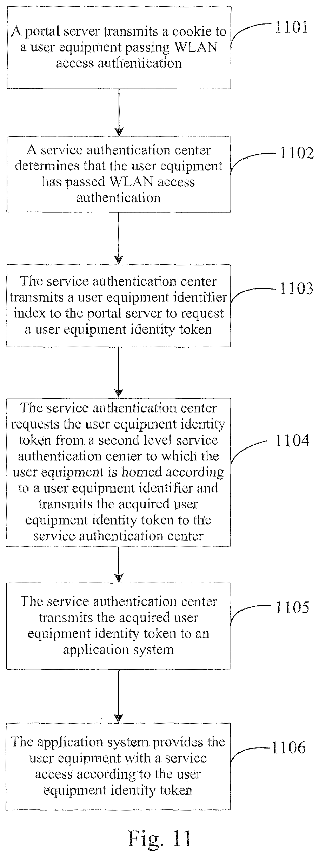

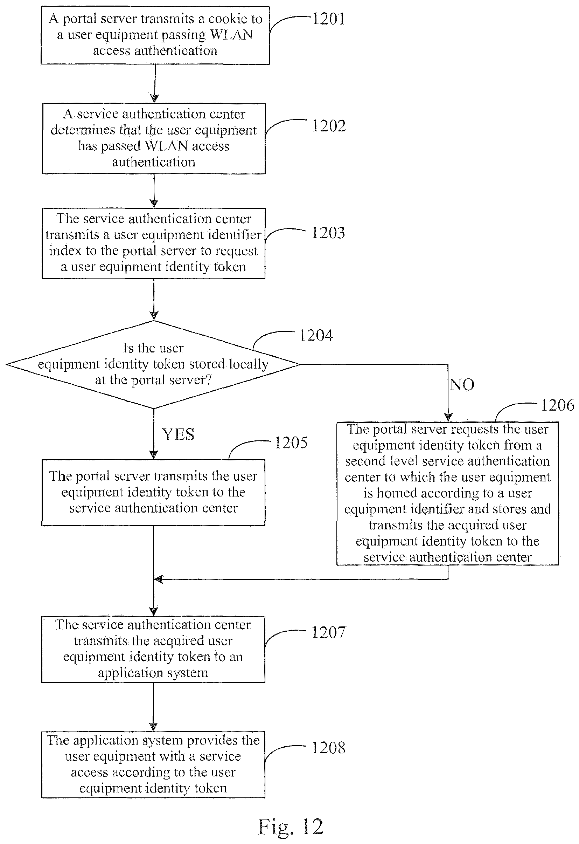

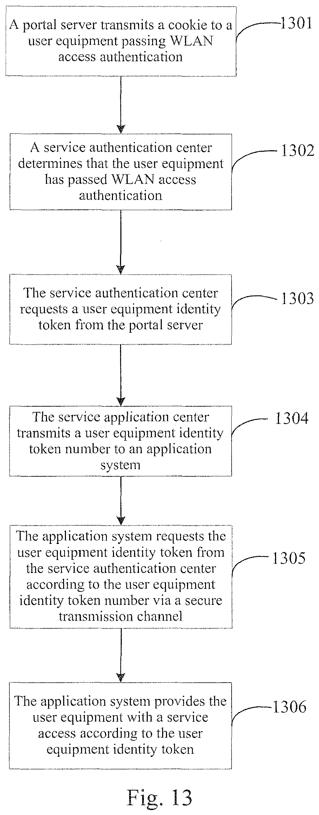

A service access method based upon WLAN access authentication according to the invention will be detailed below with reference to Fig. 10 to Fig. 13, where a system providing a service access is in the two-level architecture as illustrated in Fig. 2. The first operation of the method illustrated in Fig. 10 to Fig. 13 (the operation 1001 in Fig. 10, the operation 1101 in Fig. 11, the operation 1201 in Fig. 12 and the operation 1301 in Fig. 13) can be the operation as described above in which a portal server transmits a cookie to a user equipment which has passed WLAN access authentication. As can be appreciated, after the user equipment transmits a service access request to an application system, the application system can check whether there is a user equipment identity token present in the application system, and if so, then the application system can provide the user equipment directly with a service access. Therefore respective operations following the first operation in the method as illustrated in Fig. 10 to Fig. 13 will be performed only in the case that the user equipment identity token of the user equipment requesting the service access is absent in the application system.

In the method according to a first implementation solution of the invention as illustrated in Fig. 10, when the user equipment initiates a request to access a service of an application system after the operation 1001, a service authentication center associated with the application system can determine from the cookie in the user equipment whether the user equipment has passed WLAN access authentication (the operation 1002). At this time the application system redirects the service access request to the service authentication center associated with the application system. For example, if the user equipment is to access a service of a first level application system, then a first level service authentication center associated with the first level application system determines whether the user equipment has passed WLAN access authentication; or if the user equipment is to access a service of a second level application system, then a second level service authentication center associated with the second level application system determines whether the user equipment has passed WLAN access authentication. As described above, the cookie can include, for example, an access authentication pass indication and a user equipment identifier index, thus the service authentication center can determine, for example, from the access authentication pass indication included in the cookie in the user equipment that the user equipment has passed WLAN access authentication.

Then the service authentication center can transmit a request to the portal server using the cookie, and the portal server provides a user equipment identity token (the operation 1003). The service authentication center transmits the user equipment identity token to the application system upon reception thereof (the operation 1004), and the application system can provide the user equipment with a service access according to the user equipment identity token (the operation 1005). As can be appreciated, alternatively in the operation 1004 in which the service authentication center transmits the user equipment identity token to the application system, the service authentication center can firstly transmit the user equipment identity token to the user equipment which in turn transmits it to the application system so that the application can provide the user equipment with the desired service access.

As can be appreciated, a secure transmission channels can be established between the service authentication center and the portal server and between the service authentication center and the application system for transmission of the user equipment identifier and the user equipment identity token. As an example, a Virtual Private Network (VPN), e.g., an SSL secure tunnel, etc., can be established between the service authentication center and the portal server and between the service authentication center and the application system for transmission of the user equipment identifier and the user equipment identity token.

In a second implementation solution of the invention, after the operation 1101, a service authentication center determines from the cookie in the user equipment that the user equipment has passed WLAN access authentication (the operation 1102), and the service authentication center can acquire a user equipment identifier index from the cookie and transmit the user equipment identifier index to the portal server to request a user equipment identity token (the operation 1103). As described, the cookie transmitted from the portal server to the user equipment can include the user equipment identifier index of the user equipment, and the portal server configures and maintains a table of user equipment identifiers in which correspondence relationships between user equipment identifier indexes and user equipment identifiers are recorded. Therefore the portal server can, for example, search the table of user equipment identifiers for a corresponding user equipment identifier according to the user equipment identifier index received from the service authentication center, request the user equipment identity token from a second level service authentication center to which the user equipment is homed according to the user equipment identifier and transmit the acquired user equipment identity token to the requesting service authentication center (the operation 1104). The service authentication center transmits the user equipment identity token to an application system upon acquisition thereof (the operation 1105), and the application system can provide the user equipment with a service access according to the user equipment identity token (the operation 1106).

As described above, each second level service authentication center is associated with a user equipment database in which information of user equipments is recorded. In embodiments of the invention, a user equipment being "homed" to a specific second level service authentication center refers to that information of the user equipment is recorded in a user equipment database associated with the second level service authentication center. The portal server can determine which second level service authentication center the user equipment is homed to before the user equipment identity token is requested from the second level service authentication center to which the user equipment is homed. As can be apparent to those skilled in the art, the portal server can determine the second level service authentication center, to which the user equipment is homed, according to the user equipment identifier in various existing methods, none of which will be detailed in the invention. The portal server can transmit the user equipment identifier to the second level service authentication center, to which the user equipment is homed, to request the user equipment identity token from the second level service authentication center. Thus the second level service authentication center can acquire the corresponding user equipment identity token according to the user equipment identifier and transmit it to the portal server. Those skilled in the art can appreciate that the second level service authentication center to which the user equipment is homed can search the associated user equipment database for the user equipment identity token according to the user equipment identifier in various existing methods, none of which will be further described here.

As an alternative solution of the method illustrated in Fig. 11, Fig. 12 illustrates the method according to a third implementation solution of the invention, where user equipment identity tokens can be stored at a portal server, and the portal server can extend the table of user equipment identifiers described previously, in which correspondence relationships between user equipment identifier indexes and user equipment identifiers are recoded, by recoding therein correspondence relationship between the stored user equipment identity tokens and user equipment identifiers. Thus the portal server can search the extended table of user equipment identifiers for a corresponding user equipment identity token according to a user equipment identifier. Specific operations of the method illustrated in Fig. 12 will be detailed below.

Firstly a portal server transmits a cookie to a user equipment which has passed WLAN access authentication (the operation 1201), and thereafter a service authentication center can determine from the cookie in the user equipment that the user equipment requesting a service access has passed WLAN access authentication (the operation 1202) and acquire from the cookie and transmit a user equipment identifier index to the portal server to request a user equipment identity token (the operation 1203). The portal server can acquire a corresponding user equipment identifier according to the received user equipment identifier index and determine from the user equipment identifier whether the corresponding user equipment identity token is stored locally at the portal server in the operation 1204 of the method illustrated in Fig. 12. As can be appreciated, the portal server can search the extended table of user equipment identifiers to determine whether the corresponding user equipment identity token is stored. If the corresponding user equipment identity token is stored locally at the portal server, then the user equipment identity token can be transmitted to the service authentication center (the operation 1205). On the other hand, if the corresponding user equipment identity token is not stored locally at the portal server, then the user equipment identity token can be requested from a second level service authentication center to which the user equipment is homed according to the user equipment identifier, and the user equipment identity token is transmitted to the service authentication center requesting the user equipment identity token and also stored locally at the portal server upon acquisition thereof (the operation 1206). The service authentication center transmits the user equipment identity token to an application system upon acquisition thereof (the operation 1207), and the application system can provide the user equipment with the service access according to the user equipment identity token (the operation 1208). As can be appreciated, the portal server can update the correspondence relationship between the user equipment identity token and the user equipment identifier in the extended table of user equipment identifiers each time the user equipment identity token is stored.

As can be appreciated, secure transmission channels can be established between the service authentication center and the portal server, between the portal server and the second level service authentication center to which the user equipment is homed and between the service authentication center and the application system for transmission of the user equipment identifier and the user equipment identity token in the method illustrated in Fig. 11 and Fig. 12. As an example, a VPN, e.g., an SSL secure tunnel, etc., can be established between the service authentication center and the portal server, between the portal server and the second level service authentication center to which the user equipment is homed and between the service authentication center and the application system for transmission of the user equipment identifier and the user equipment identity token.

In the method described above with reference to Fig. 10 to Fig. 12, the service authentication center transmits the user equipment identity token to the application system after it is acquired through the portal server. As an alternative, the service authentication center can store the acquired user equipment identity token, for example, configure a table of user equipment identity tokens and set a corresponding user equipment identity token number for each user equipment identity token. Fig. 13 illustrates the method in this implementation solution, where a portal server transmits a cookie to a user equipment which has passed WLAN access authentication during WLAN access authentication of the user equipment (the operation 1301). Next a service authentication center determines from the cookie that the user equipment has passed WLAN access authentication (the operation 1302), and the portal server receives a request from the service authentication center for a user equipment identity token and transmits the user equipment identity token to the service authentication center (the operation 1303), and then the service authentication center stores the user equipment identity token, for example, in a table of user equipment identity tokens instead of transmitting the user equipment identity token directly to an application system and sets a corresponding user equipment identity token number thereof. Therefore the service authentication center transmits the user equipment identity token number to the application system (the operation 1304) instead of transmitting the user equipment identity token directly. The application system establishes a secure transmission channel with the service authentication center upon reception of the user equipment identity token number and provides the service authentication center with the user equipment identity token number, and the service authentication center searches the table of user equipment identity tokens for the corresponding user equipment identity token and further transmits the user equipment identity token to the application system via the secure transmission channel (the operation 1305). As an example, a VPN, e.g., an SSL secure tunnel, etc., can be established between the service authentication center and the application system for transmission of the user equipment identity token. The application system can provide the user equipment with a service access according to the user equipment identity token after the user equipment identity token is acquired (the operation 1306).

As described previously, the service authentication center can transmit the user equipment identity token to the application system via the user equipment so that the application system can provide the user equipment with the desired service access. However the security of a transmission channel between the service authentication center and the user equipment and a transmission channel between the user equipment and the application system is typically poor, thus transmission of the user equipment identity token may result in such a potential security risk that the user equipment identity token may be stolen. In the method illustrated in Fig. 13, the service authentication center transmits only the user equipment identity token number to the application system via the user equipment, and the user equipment identity token is transmitted on the secure transmission channels, thereby improving the security.

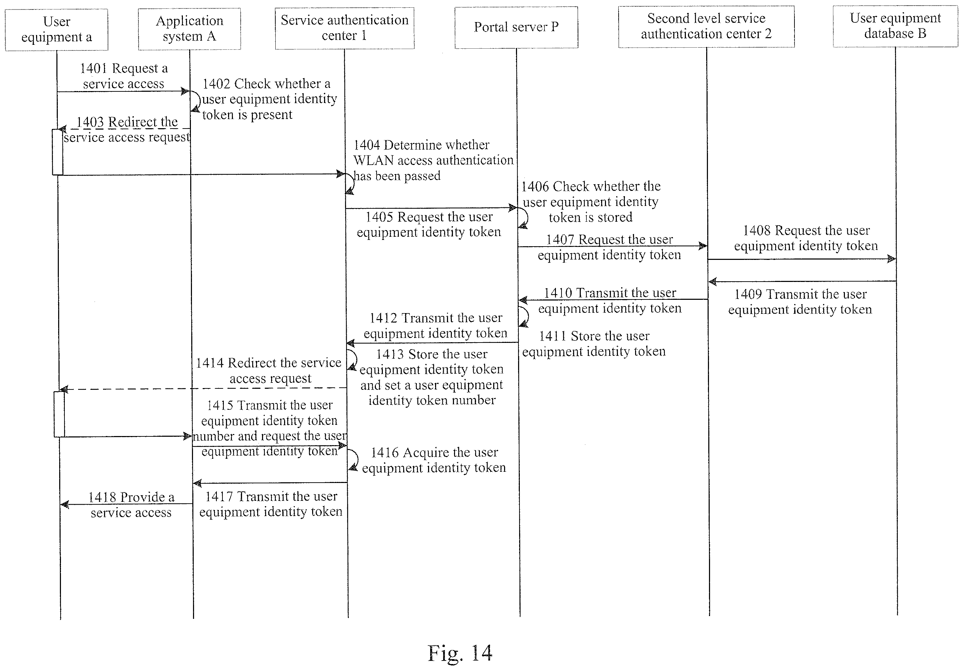

In order to facilitate understanding, a specific process of the service access method based upon WLAN access authentication according to an embodiment of the invention will be described below in a specific application scenario with reference to Fig. 14.

In the specific example as illustrated in Fig. 14, an application system A is associated with a service authentication center 1, where the application system A can be a first level application system or a second level application system, and in correspondence therewith, the service authentication center 1 can be a first level service authentication center or a second level service authentication center. A second level service authentication center 2 is associated with a user equipment database B in which information of a user equipment 'a' is recorded, that is, the user equipment 'a' is homed to the second level service authentication center 2. A portal server P transmits a cookie including an access authentication pass indication and a user equipment identifier index to the user equipment 'a' which has passed WLAN access authentication, and the portal server P is capable of storing user equipment identity tokens. Fig. 14 illustrates the following process flow of the specific example:
Operation 1401: The user equipment 'a' initiates a service access request to the application system A;
Operation 1402: The application system A checks whether a user equipment identity token of the user equipment 'a' is present, and if so, then the flow jumps to the operation 1418;
Operation 1403: The application system A redirects the service access request of the user equipment 'a' to the service authentication center 1;
Operation 1404: The service authentication center 1 determines whether the user equipment 'a' has passed WLAN access authentication according to whether the cookie in the user equipment 'a' includes the access authentication pass indication, and if not so, then the service authentication center 1 performs WLAN access authentication of the user equipment 'a';
Operation 1405: The service authentication center 1 establishes a secure transmission channel to the portal server P and transmits the user equipment identifier index acquired from the cookie to the portal server P to request the user equipment identity token;
Operation 1406: The portal server P checks whether the user equipment identity token of the user equipment 'a' is stored locally according to a user equipment identifier corresponding to the user equipment identifier index, and if so, then flow jumps to the operation 1412;
Operation 1407: The portal server P establishes a secure transmission channel with the second level service authentication center 2 and transmits a user equipment identity token request to the second level service authentication center 2;
Operation 1408: The second level service authentication center 2 transmits the user equipment identity token request to the user equipment database B;
Operation 1409: The user equipment database B transmits the user equipment identity token to the second level service authentication center 2;
Operation 1410: The second level service authentication center 2 transmits the user equipment identity token to the portal server P on the secure transmission channel established in the operation 1407;
Operation 1411: The portal server P stores the acquired user equipment identity token locally;
Operation 1412: The portal server P transmits the user equipment identity token to the service authentication center 1 on the secure transmission channel established in the operation 1405;
Operation 1413: The service authentication center 1 stores the acquired user equipment identity token and sets a user equipment identity token number for the user equipment identity token;
Operation 1414: The service authentication center 1 redirects the service access request of the user equipment 'a' to the application system A, here by transmitting the user equipment identity token number to the application system A;
Operation 1415: The application system A establishes a secure transmission channel with the service authentication center 1 and transmits the user equipment identity token number to the service authentication center 1 to request the user equipment identity token;
Operation 1416: The service authentication center 1 acquires the user equipment identity token according to the user equipment identity token number;
Operation 1417: The service authentication center 1 transmits the user equipment identity token to the application system A on the secure transmission channel established in the operation 1415; and
Operation 1418: The application system A provides the user equipment 'a' with a service access according to the user equipment identity token.

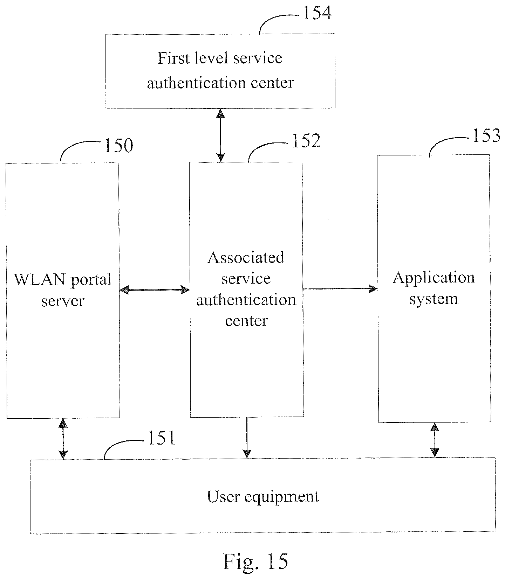

Fig. 15 is a schematic structural diagram of a service access system based upon Wireless local Area Network (WLAN) access authentication according to the invention, and the system includes:
a WLAN portal server 150 configured to transmit a first cookie to a user equipment which has passed WLAN access authentication during WLAN access authentication of the user equipment;
the user equipment 151 configured to receive the first cookie transmitted from the WLAN portal server;
an associated service authentication center 152 configured to determine, from the first cookie in the user equipment which has passed WLAN access authentication, that the user equipment has passed WLAN access authentication, acquire a user equipment identity token of the user equipment using the first cookie and transmit the acquired user equipment identity token to an application system 153, when the user equipment requests to access a service of the application system; and
the application system 153 configured to provide the user equipment with a service access according to the user equipment identity token.

The associated service authentication center 152 is particularly configured to acquire a user equipment identifier from the first cookie and to request the user equipment identity token from a second level service authentication center to which the user equipment is homed according to the user equipment identifier.

When the associated service authentication center is a second level service authentication center, the system further includes a first level service authentication center 154;
The associated service authentication center 152 is particularly configured to acquire the user equipment identity token via the first level service authentication center 154; and
The first level service authentication center 154 is configured to request, from the second level service authentication center to which the user equipment is homed using the first cookie, the user equipment identity token to be provided to the associated service authentication center 152.

When the associated service authentication center is a second level service authentication center, the associated service authentication center is particularly configured to transmit the first cookie to the first level service authentication center 154; and
The first level service authentication center 154 is particularly configured to acquire the user equipment identifier from the first cookie, to request the user equipment identity token from the second level service authentication center to which the user equipment is homed according to the user equipment identifier, and to transmit the user equipment identity token and the user equipment identifier to the associated service authentication center 152.

The associated service authentication center 152 is further configured to store the user equipment identifier transmitted from the first level service authentication center 154 and allocate a user equipment identifier index for the user equipment identifier upon reception of the user equipment identifier, and to transmit a second cookie including the identifier of the associated service authentication center 152 and the user equipment identifier index to the user equipment to replace the first cookie.

When the associated service authentication center 152 is a second level service authentication center, the associated service authentication center 152 is particularly configured to acquire the user equipment identifier from the first cookie and transmit the user equipment identifier to a first level service authentication center 154; and
The first level service authentication center 154 is particularly configured to request the user equipment identity token from the second level service authentication center to which the user equipment is homed according to the user equipment identifier and to transmit the user equipment identity token to the associated service authentication center 152.

The associated service authentication center 152 is further configured to store the user equipment identifier and allocate a user equipment identifier index for the user equipment identifier after the user equipment identifier is acquired from the first cookie, and to transmit a second cookie including the identifier of the associated service authentication center 152 and the user equipment identifier index to the user equipment to replace the first cookie.

The associated service authentication center 152 is further configured to transmit a request to the WLAN portal server using the first cookie and to acquire the user equipment identity token of the user equipment from the WLAN portal server; and
The WLAN portal server 150 is further configured to acquire the user equipment identity token of the user equipment and to transmit the user equipment identity token to the associated service authentication center 152.

The WLAN portal server 150 is further configured to configure and maintain a table of user equipment identifiers in which correspondence relationships between user equipment identifier indexes and user equipment identifiers are recorded.

The WLAN portal server 150 is particularly configured to acquire from the table of user equipment identifiers a user equipment identifier corresponding to a user equipment identifier index transmitted from the associated service authentication center 152 according to the user equipment identifier index, where the user equipment identifier index is acquired by the associated service authentication center 152 from the first cookie, to request the user equipment identity token of the user equipment from a second level service authentication center to which the user equipment is homed according to the corresponding user equipment identifier, and to transmit the acquired user equipment identity token to the associated service authentication center 152.

The WLAN portal server 150 is further configured to store the user equipment identity token, and the table of user equipment identifiers further includes correspondence relationships between user equipment identity tokens and user equipment identifiers.

The WLAN portal server 150 is particularly configured to search the table of user equipment identifiers for the user equipment identifier according to a user equipment identifier index transmitted from the associated service authentication center 152, where the user equipment identifier index is acquired by the associated service authentication center 152 from the first cookie, and if the user equipment identity token corresponding to the user equipment identifier is not stored locally, then request the user equipment identity token from a second level service authentication center to which the user equipment is homed according to the user equipment identifier, and store locally and transmit the acquired user equipment identity token to the associated service authentication center 152; or if the user equipment identity token corresponding to the user equipment identifier is stored locally, then transmit the corresponding user equipment identity token to the associated service authentication center 152.

The associated service authentication center 152 is further configured to establish a secure transmission channel with the WLAN portal server 150 and the application system 153 and to transmit the user equipment identity token on the established secure transmission channel.

The associated service authentication center 152 is further configured to store the user equipment identity token and to set a user equipment identity token number corresponding to each user equipment identity token; and
The associated service authentication center 152 is particularly configured to transmit the user equipment identity token number to the application system 153 and to transmit the user equipment identity token corresponding to the user equipment identity token number to the application system 153 on a secure transmission channel established with the application system 153 according to the user equipment identity token number transmitted from the application system 153 to request the user equipment identity token.

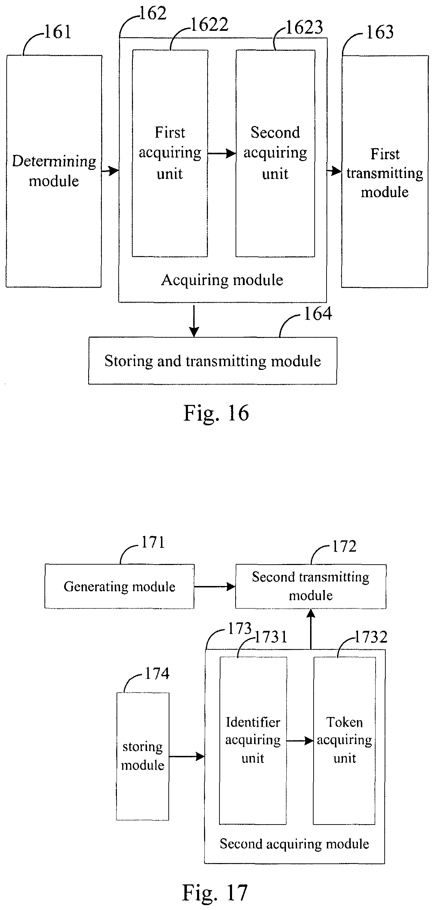

Fig. 16 is a schematic structural diagram of a service access device based upon Wireless Local Area Network (WLAN) access authentication according to the invention, and the device includes:
a determining module 161 configured to determine from a first cookie in a user equipment that the user equipment has passed WLAN access authentication, where the first cookie is transmitted from a WLAN portal server to the user equipment which has passed WLAN access authentication during WLAN access authentication of the user equipment;
a acquiring module 162 configured to acquire a user equipment identity token of the user equipment using the first cookie; and
a first transmitting module 163 configured to transmit the acquired user equipment identity token to an application system.

The acquiring module 162 includes:
a first acquiring unit 1621 configured to acquire a user equipment identifier from the first cookie; and
a second acquiring unit 1622 configured to request the user equipment identity token from a second level service authentication center to which the user equipment is homed according to the user equipment identifier.

The device further includes:
a storing and transmitting module 164 configured to store the user equipment identifier and allocate a user equipment identifier index for the user equipment identifier after the user equipment identifier is acquired from the first cookie, and to transmit a second cookie including the identifier of the associated service authentication center and the user equipment identifier index to the user equipment.

The acquiring module 162 is particularly configured to transmit a request to the WLAN portal server using the first cookie and to acquire the user equipment identity token of the user equipment from the WLAN portal server.

The storing and transmitting module 164 is further configured to store the acquired user equipment identity token of the user equipment and to set a corresponding user equipment identity token number for each user equipment identity token.

In the device,
the first transmitting module 163 is further configured to transmit the user equipment identity token number to the application system and to transmit the user equipment identity token corresponding to the user equipment identity token number to the application system on a secure transmission channel established with the application system according to the user equipment identity token number transmitted from the application system to request the user equipment identity token.

Fig. 17 is a schematic structural diagram of a service access device based upon Wireless Local Area Network (WLAN) access authentication according to the invention, and the device includes:
a generating module 171 configured to generate a first cookie for a user equipment which has passed WLAN access authentication during WLAN access authentication of the user equipment; and
a second transmitting module 172 configured to transmit the first cookie to the user equipment which has passed WLAN access authentication so that the user equipment requesting to access a service of an application system acquires a user equipment identity token of the user equipment using the first cookie.

The device further includes:
a second acquiring module 173 configured to acquire the user equipment identity token in response to a request transmitted from an associated service authentication center.

The device further includes:
a storing module 174 configured to configure and maintain a table of user equipment identifiers in which correspondence relationships between user equipment identifier indexes and user equipment identifiers are recorded.

The second acquiring module 173 includes:
an identifier acquiring unit 1731 configured to acquire from the table of user equipment identifiers a user equipment identifier corresponding to a user equipment identifier index transmitted from the associated service authentication center according to the user equipment identifier index, where the user equipment identifier index is acquired by the associated service authentication center from the first cookie; and
a token acquiring unit 1732 configured to request the user equipment identity token of the user equipment from a second level service authentication center to which the user equipment is homed according to the corresponding user equipment identifier, and to transmit the acquired user equipment identity token to the associated service authentication center through the second transmitting module 172.

The storing module 174 is further configured to store the user equipment identity token, and the table of user equipment identifiers further includes correspondence relationships between user equipment identity tokens and user equipment identifiers.

In the device,
the identifier acquiring unit 1731 is further configured to search the table of user equipment identifiers for the user equipment identifier according to a user equipment identifier index transmitted from the associated service authentication center, where the user equipment identifier index is acquired by the associated service authentication center from the first cookie; and
the token acquiring unit 1732 is further configured to, if the user equipment identity token corresponding to the user equipment identifier is not stored locally, then request the user equipment identity token from a second level service authentication center to which the user equipment is homed according to the user equipment identifier, and store locally and transmit the acquired user equipment identity token to the associated service authentication center through the second transmitting unit 172; if the user equipment identity token corresponding to the user equipment identifier is stored locally, transmit the corresponding user equipment identity token to the associated service authentication center through the second transmitting unit 172.

The illustrative implementation solutions of the invention have been described above with reference to the drawings. Those skilled in the art shall appreciate the foregoing implementation solutions are merely illustrative examples presented for the purpose of the description but not to be limiting. Any modifications, equivalent substitutions, etc., made without departing from the claimed scope of the teaching and the claims of the invention shall come into the claimed scope of the invention.

## Claims

1. A service access method based upon Wireless Local Area Network, WLAN, access authentication, comprising:
a WLAN portal server transmitting (301, 401, 501, 601, 701, 1001, 1101, 1201, 1301) a first cookie to a user equipment which has passed WLAN access authentication during WLAN access authentication of the user equipment, wherein the first cookie comprises an indication that the user equipment has passed WLAN access authentication;
a service authentication center associated with an application system determining (302, 402, 502, 602, 702, 1002, 1102, 1202, 1302), from the first cookie in the user equipment which has passed WLAN access authentication, that the user equipment has passed WLAN access authentication when the user equipment requests to access a service of the application system;
the associated service authentication center acquiring (303, 703, 1003) a user equipment identity token of the user equipment using the first cookie;
the associated service authentication center transmitting (304, 404, 508, 608, 704, 1004, 1105, 1207, 1304) the acquired user equipment identity token to the application system; and
the application system providing (305, 405, 509, 609, 706, 1005, 1106, 1208, 1306) the user equipment with a service access according to the user equipment identity token.

2. The method of claim 1, wherein the first cookie comprises: an access authentication pass indication and a user equipment identifier; and.
the associated service authentication center acquiring a user equipment identity token of the user equipment using the first cookie comprises:
the associated service authentication center acquiring the user equipment identifier from the first cookie; and
requesting the user equipment identity token from a second level service authentication center to which the user equipment is homed according to the user equipment identifier.

3. The method of claim 2, wherein if the associated service authentication center is a second level service authentication center, then the requesting the user equipment identity token from a second level service authentication center to which the user equipment is homed according to the user equipment identifier comprises:
the associated service authentication center requesting the user equipment identity token from the second level service authentication center to which the user equipment is homed using the first cookie via a first level service authentication center; and wherein,
the requesting the user equipment identity token from the second level service authentication center to which the user equipment is homed using the first cookie comprises:
the first level service authentication center receiving the first cookie transmitted from the associated service authentication center; and
the first level service authentication center acquiring the user equipment identifier from the first cookie, requesting the user equipment identity token from the second level service authentication center to which the user equipment is homed according to the user equipment identifier, and transmitting the user equipment identity token and the user equipment identifier to the associated service authentication center;
or comprises:
the first level service authentication center receiving the user equipment identifier transmitted from the associated service authentication center, which is acquired from the first cookie; and
the first level service requesting the user equipment identity token from the second level service authentication center to which the user equipment is homed according to the user equipment identifier, and transmitting the user equipment identity token to the associated service authentication center.

4. The method of claim 2 or 3, further comprising:
the associated service authentication center storing the user equipment identifier after the user equipment identifier is acquired; and
allocating a user equipment identifier index for the user equipment identifier, and transmitting a second cookie comprising the identifier of the associated service authentication center and the user equipment identifier index to the user equipment to replace the first cookie.

5. The method of claim 1, wherein the associated service authentication center acquiring a user equipment identity token of the user equipment using the first cookie comprises:
the associated service authentication center transmitting a request to the WLAN portal server using the first cookie and acquiring the user equipment identity token of the user equipment from the WLAN portal server.

6. The method of claim 5, wherein the first cookie comprises: an access authentication pass indication and a user equipment identifier index;
the WLAN portal server configures and maintains a table of user equipment identifiers in which correspondence relationship between user equipment identifier indexes and user equipment identifiers are recorded; and
the acquiring the user equipment identity token of the user equipment from the WLAN portal server comprises:
the WLAN portal server acquiring from the maintained table of user equipment identifiers a user equipment identifier corresponding to a user equipment identifier index transmitted from the associated service authentication center according to the user equipment identifier index, wherein the user equipment identifier index is acquired by the associated service authentication center from the first cookie; and
the WLAN portal server requesting the user equipment identity token of the user equipment from a second level service authentication center to which the user equipment is homed according to the corresponding user equipment identifier, and transmitting the acquired user equipment identity token to the associated service authentication center; or
if the WLAN portal server stores the user equipment identity token, and the table of user equipment identifiers further comprises correspondence relationships between user equipment identity tokens and user equipment identifiers, the acquiring the user equipment identity token of the user equipment from the WLAN portal server comprises:
the WLAN portal server searching the table of user equipment identifiers for a user equipment identifier corresponding to a user equipment identifier index transmitted from the associated service authentication center according to the user equipment identifier index, wherein the user equipment identifier index is acquired by the associated service authentication center from the first cookie; and
if the user equipment identity token corresponding to the corresponding user equipment identifier is not stored locally at the WLAN portal server, then the WLAN portal server requesting the user equipment identity token from a second level service authentication center to which the user equipment is homed according to the user equipment identifier, and storing locally and transmitting the acquired user equipment identity token to the associated service authentication center; or
if the user equipment identity token corresponding to the corresponding user equipment identifier is stored locally at the WLAN portal server, then the WLAN portal server transmitting the corresponding user equipment identity token to the associated service authentication center.

7. The method of claim 1, further comprising:
the associated service authentication center storing the acquired user equipment identity token of the user equipment and setting a corresponding user equipment identity token number for each user equipment identity token; and
the associated service authentication center transmitting the acquired user equipment identity token to the application system comprises:
the associated service authentication center transmitting the user equipment identity token number to the application system; and
the associated service authentication center transmitting the user equipment identity token corresponding to the user equipment identity token number to the application system on a secure transmission channel established with the application system according to the user equipment identity token number transmitted from the application system to request the user equipment identity token.

8. A service access system based upon Wireless local Area Network, WLAN, access authentication, comprising:
a WLAN portal server (150) configured to transmit a first cookie to a user equipment (151) which has passed WLAN access authentication during WLAN access authentication of the user equipment (151), wherein the first cookie comprises an indication that the user equipment has passed WLAN access authentication;
an associated service authentication center (152) configured to determine, from the first cookie in the user equipment (151) which has passed WLAN access authentication, that the user equipment (151) has passed WLAN access authentication, acquire a user equipment identity token of the user equipment (151) using the first cookie and transmit the acquired user equipment identity token to an application system (153), when the user equipment (151) requests to access a service of the application system (153); and
the application system (153) configured to provide the user equipment with a service access according to the user equipment identity token.

9. A service access device based upon Wireless Local Area Network, WLAN, access authentication, comprising:
a determining module (161) configured to determine from a first cookie in a user equipment that the user equipment has passed WLAN access authentication, wherein the first cookie is transmitted from a WLAN portal server to the user equipment which has passed WLAN access authentication during WLAN access authentication of the user equipment, and wherein the first cookie comprises an indication that the user equipment has passed WLAN access authentication;
a acquiring module (162) configured to acquire a user equipment identity token of the user equipment using the first cookie; and
a first transmitting module (163) configured to transmit the acquired user equipment identity token to an application system.

10. The device of claim 9, wherein the acquiring module comprises:
a first acquiring unit (1622) configured to acquire a user equipment identifier from the first cookie; and
a second acquiring unit (1623) configured to request the user equipment identity token from a second level service authentication center to which the user equipment is homed according to the user equipment identifier.

11. The device of claim 9, further comprising:
a storing and transmitting module (164) configured to store the user equipment identifier and allocate a user equipment identifier index for the user equipment identifier after the user equipment identifier is acquired from the first cookie, and to transmit a second cookie comprising the identifier of the associated service authentication center and the user equipment identifier index to the user equipment.

12. The device of claim 9, wherein the acquiring module (162) is particularly configured to transmit a request to the WLAN portal server using the first cookie and to acquire the user equipment identity token of the user equipment from the WLAN portal server.

13. The device of claim 9, wherein the storing and transmitting module (164) is further configured to store the acquired user equipment identity token of the user equipment and to set a corresponding user equipment identity token number for each user equipment identity token; and
the first transmitting module (163) is further configured to transmit the user equipment identity token number to the application system and to transmit the user equipment identity token corresponding to the user equipment identity token number to the application system on a secure transmission channel established with the application system according to the user equipment identity token number transmitted from the application system to request the user equipment identity token.

14. A service access device based upon Wireless Local Area Network, WLAN, access authentication, comprising:
a generating module (171) configured to generate a first cookie for a user equipment which has passed WLAN access authentication during WLAN access authentication of the user equipment, wherein the first cookie comprises an indication that the user equipment has passed WLAN access authentication; and
a second transmitting module (172) configured to transmit the first cookie to the user equipment which has passed WLAN access authentication, wherein the first cookie is used for acquiring, by a service authentication center associated with an application system, the user equipment identity token of the user equipment when the user equipment requests to access a service of the application system.

15. The device of claim 14, further comprising:
a second acquiring module (173) configured to acquire the user equipment identity token in response to a request transmitted from an associated service authentication center; and
a storing module (174) configured to configure and maintain a table of user equipment identifiers in which correspondence relationships between user equipment identifier indexes and user equipment identifiers are recorded; and wherein,
the second acquiring module (173) comprises:
an identifier acquiring unit (1731) configured to acquire from the table of user equipment identifiers a user equipment identifier corresponding to a user equipment identifier index transmitted from the associated service authentication center according to the user equipment identifier index, wherein the user equipment identifier index is acquired by the associated service authentication center from the first cookie; and
a token acquiring unit (1732) configured to request the user equipment identity token of the user equipment from a second level service authentication center to which the user equipment is homed according to the corresponding user equipment identifier, and to transmit the acquired user equipment identity token to the associated service authentication center;
the storing module (174) is further configured to store the user equipment identity token, and the table of user equipment identifiers further comprises correspondence relationships between user equipment identity tokens and user equipment identifiers;
the identifier acquiring unit (1731) is further configured to search the table of user equipment identifiers for the user equipment identifier according to a user equipment identifier index transmitted from the associated service authentication center, wherein the user equipment identifier index is acquired by the associated service authentication center from the first cookie; and
the token acquiring unit (1732) is further configured to, if the user equipment identity token corresponding to the user equipment identifier is not stored locally, then request the user equipment identity token from a second level service authentication center to which the user equipment is homed according to the user equipment identifier, and store locally and transmit the acquired user equipment identity token to the associated service authentication center; if the user equipment identity token corresponding to the user equipment identifier is stored locally, then transmit the corresponding user equipment identity token to the associated service authentication center.

## Patentansprüche

1. Dienstzugangsverfahren auf der Basis von WLAN (Wireless Local Area Network) Zugangsauthentifikation, mit den Schritten:
Übertragen (301, 401, 501, 601, 701, 1001, 1101, 1201, 1301), durch einen WLAN-Portalserver, eines ersten Cookies an ein Benutzergerät, welches eine WLAN-Zugangsauthentifikation während einer WLAN-Zugangsauthentifikation des Benutzergerätes durchlaufen hat, wobei das erste Cookie einen Hinweis enthält, dass das Benutzergerät eine WLAN Zugangsauthentifikation durchlaufen hat;
Feststellen (302, 402, 502, 602, 702, 1002, 1102, 1202, 1302), durch eine einem Anwendungssystem zugewiesene Dienstauthentifikationszentrale, aus dem ersten Cookie in dem Benutzergerät, das eine WLAN-Zugangsauthentifikation durchlaufen hat, dass das Benutzergerät eine WLAN-Zugangsauthentifikation durchlaufen hat, wenn das Benutzergerät den Zugang zu einem Dienst des Anwendungssystems anfordert;
Erwerben (303, 703, 1003), durch die zugewiesene Dienstauthentifikationszentrale, eines Benutzergeräteerkennungszeichens des Benutzergerätes unter Verwendung des ersten Cookies;
Übertragen (304, 404, 508, 608, 704, 1004, 1105, 1207, 1304), durch die zugewiesene Dienstauthentifikationszentrale, des erworbenen Benutzergeräteerkennungszeichens an das Anwendungssystem; und
Versehen (305, 405, 509, 609, 706, 1005, 1106, 1208, 1306), durch das Anwendungssystem, des Benutzergerätes mit einem Dienstzugang gemäß dem Benutzergeräteerkennungszeichen.

2. Verfahren nach Anspruch 1, wobei das erste Cookie Folgendes aufweist: einen Zugangsauthentifikationsdurchlaufhinweis und eine Benutzergerätekennung; und
Das Erwerben, durch die zugewiesene Dienstauthentifikationszentrale, eines Benutzergeräteerkennungszeichens des Benutzergerätes unter Verwendung des ersten Cookies Folgendes aufweist:
Erwerben, durch die zugewiesene Dienstauthentifikationszentrale der Benutzergerätekennung aus dem ersten Cookie; und
Anfordern des Benutzergeräteerkennungszeichens von einer Dienstauthentifikationszentrale der zweiten Ebene, der das Benutzergerät gemäß der Benutzergerätekennung zugeordnet ist.

3. Verfahren nach Anspruch 2, wobei, falls die zugewiesene Dienstauthentifikationszentrale eine Dienstauthentifikationszentrale der zweiten Ebene ist, das Anfordern des Benutzergeräteerkennungszeichens von einer Dienstauthentifikationszentrale der zweiten Ebene, der das Benutzergerät gemäß der Benutzergerätekennung zugeordnet ist, dann Folgendes aufweist:
Anfordern, durch die zugewiesene Dienstauthentifikationszentrale, des Benutzergeräteerkennungszeichens von der Dienstauthentifikationszentrale der zweiten Ebene, der das Benutzergerät zugeordnet ist, unter Verwendung des ersten Cookies über eine Serviceauthentifikationszentrale der ersten Ebene, und wobei
das Anfordern des Benutzergeräteerkennungszeichens von der Dienstauthentifikationszentrale der zweiten Ebene, der das Benutzergerät zugeordnet ist, unter Verwendung des ersten Cookies Folgendes aufweist:
Empfangen, durch die Dienstauthentifikationszentrale der ersten Ebene, des von der zugewiesenen Dienstauthentifikationszentrale übertragenen ersten Cookies; und
Erwerben, durch die Dienstauthentifikationszentrale der ersten Ebene, der Benutzergerätekennung von dem ersten Cookie, Anfordern des Benutzergeräteerkennungszeichens von der Dienstauthentifikationszentrale der zweiten Ebene, der das Benutzergerät gemäß der Benutzergerätekennung zugeordnet ist, und Übertragen des Benutzergeräteerkennungszeichens und der Benutzergerätekennung an die zugewiesene Dienstauthentifikationszentrale;
oder Folgendes aufweist:
Empfangen, durch die Dienstauthentifikationszentrale der ersten Ebene, der von der zugewiesenen Dienstauthentifikationszentrale übertragenen Benutzergerätekennung, die von dem ersten Cookie erworben wird; und
Anfordern, durch den Dienst der ersten Ebene, des Benutzergeräteerkennungszeichens von der Dienstauthentifikationszentrale der zweiten Ebene, der das Benutzergerät gemäß der Benutzergerätekennung zugeordnet ist, und Übertragen des Benutzergeräteerkennungszeichens an die zugewiesene Dienstauthentifikationszentrale.

4. Verfahren nach Anspruch 2 oder 3, weiterhin mit Folgendem:
Speichern, durch die zugewiesene Dienstauthentifikationszentrale, der Benutzergerätekennung, nachdem die Benutzergerätekennung erworben wird; und
Zuweisen eines Benutzergeräteerkennungsindex für die Benutzergerätekennung, und Übertragen eines zweiten Cookies, das die Kennung der zugewiesenen Dienstauthentifikationszentrale und den Benutzergerätekennungsindex enthält, an das Benutzergerät, um das erste Cookie zu ersetzen.

5. Verfahren nach Anspruch 1, wobei das Erwerben, durch die zugewiesene Dienstauthentifikationszentrale, eines Benutzergerätekennungszeichens des Benutzergerätes unter Verwendung des ersten Cookies Folgendes aufweist:
Übertragen, durch die zugewiesene Dienstauthentifikationszentrale, einer Anforderung an den WLAN-Portalserver unter Verwendung des ersten Cookies und Erwerben des Benutzergeräteerkennungszeichens des Benutzergerätes von dem WLAN-Portalserver.

6. Verfahren nach Anspruch 5, wobei das erste Cookie Folgendes aufweist: einen Zugangsauthentifikationsdurchlaufhinweis und einen Benutzergerätekennungsindex;
der WLAN-Portalserver eine Tabelle von Benutzergerätekennungen konfiguriert und beibehält, in welchen Korrespondenzbeziehungen zwischen Benutzergerätekennungsindexen und Benutzergerätekennungen aufgezeichnet werden; und
das Erwerben des Benutzergeräteerkennungszeichens des Benutzergerätes von dem WLAN-Portalserver Folgendes aufweist:
Erwerben, durch den WLAN-Portalserver, von der beibehaltenen Tabelle von Benutzergerätekennungen einer Benutzergerätekennung entsprechend einem Benutzergerätekennungsindex, welcher von der zugewiesenen Dienstauthentifikationszentrale gemäß dem Benutzergerätekennungsindex übertragen wird, wobei der Benutzergerätekennungsindex durch die zugewiesene Dienstauthentifikationszentrale von dem ersten Cookie erworben wird; und
Anfordern, durch den WLAN-Portalserver, des Benutzergeräteerkennungszeichens des Benutzergerätes von einer Dienstauthentifikationszentrale der zweiten Ebene, welcher das Benutzergerät gemäß der entsprechenden Benutzergerätekennung zugeordnet ist, und Übertragen des erworbenen Benutzergeräteerkennungszeichens an die zugewiesene Dienstauthentifikationszentrale; oder
falls der WLAN-Portalserver das Benutzergeräteerkennungszeichen speichert und die Tabelle von Benutzergerätekennungen ferner Korrespondenzbeziehungen zwischen Benutzergeräteerkennungszeichen und Benutzergerätekennungen enthält, das Erwerben des Benutzergeräteerkennungszeichens des Benutzergerätes von dem WLAN-Portalserver Folgendes aufweist:
Durchsuchen, durch den WLAN-Portalserver, der Tabelle von Benutzergerätekennungen nach einer Benutzergerätekennung entsprechend einem Benutzergerätekennungsindex, der von der zugewiesenen Dienstauthentifikationszentrale gemäß dem Benutzergerätekennungsindex übertragen wird, wobei der Benutzergerätekennungsindex durch die zugewiesene Dienstauthentifikationszentrale von dem ersten Cookie erworben wird; und
falls das Benutzergeräteerkennungszeichen entsprechend der entsprechenden Benutzergerätekennung nicht lokal an dem WLAN-Portalserver gespeichert wird, dann Anfordern durch den WLAN-Portalserver des Benutzergeräteerkennungszeichens von einer Dienstauthentifikationszentrale der zweiten Ebene, der das Benutzergerät gemäß der Benutzergerätekennung zugeordnet ist, und lokal Speichern und Übertragen des erworbenen Benutzergeräteerkennungszeichens an das zugewiesene Dienstauthentifikationszentrale; oder
falls das Benutzergeräteerkennungszeichen entsprechend der entsprechenden Benutzergerätekennung lokal an dem WLAN-Portalserver gespeichert wird, sodann Übertragen durch den WLAN-Portalserver des entsprechenden Benutzergeräteerkennungszeichens an die zugewiesene Dienstauthentifikationszentrale.

7. Verfahren nach Anspruch 1, ferner mit Folgendem:
Speichern, durch die zugewiesene Dienstauthentifikationszentrale, des erworbenen Benutzergeräteerkennungszeichens des Benutzergerätes und Festlegen einer entsprechenden Benutzergeräteerkennungszeichenzahl für jedes Benutzergeräteerkennungszeichen; und
das Übertragen, durch die zugewiesene Dienstauthentifikationszentrale, des erworbenen Benutzergeräteerkennungszeichens an das Anwendungssystem Folgendes aufweist:
Übertragen, durch die zugewiesene Dienstauthentifikationszentrale, der Benutzergeräteerkennungszeichenzahl an das Anwendungssystem; und
Übertragen, durch die zugewiesene Dienstauthentifikationszentrale, des Benutzergeräteerkennungszeichens entsprechend der Benutzergeräteerkennungszeichenzahl an das Anwendungssystem auf einem sicheren Übertragungskanal, der mit dem Anwendungssystem, gemäß der von dem Anwendungssystem übertragenen Benutzergeräteerkennungszeichenzahl eingerichtet ist, um das Benutzergeräteerkennungszeichen anzufordern.

8. Dienstzugangssystem auf der Basis von WLAN-Zugangsauthentifikation, mit:
einem WLAN-Portalserver (150), der dazu konfiguriert ist, ein erstes Cookie an ein Benutzergerät (151) zu übertragen, welches eine WLAN-Zugangsauthentifikation während einer WLAN-Zugangsauthentifikation des Benutzergerätes (151) durchlaufen hat, wobei das erste Cookie einen Hinweis enthält, dass das Benutzergerät eine WLAN-Zugangsauthentifikation durchlaufen hat;
einer zugewiesenen Dienstauthentifikationszentrale (152), die dazu konfiguriert ist, aus dem ersten Cookie in dem Benutzergerät (151), das eine WLAN Zugangsauthentifikation durchlaufen hat, festzustellen, dass das Benutzergerät (151) eine WLAN Zugangsauthentifikation durchlaufen hat, ein Benutzergeräteerkennungszeichen des Benutzergerätes (151) unter Verwendung des ersten Cookies zu erwerben und das erworbene Benutzergeräteerkennungszeichen an ein Anwendungssystem (153) zu übertragen, wenn das Benutzergerät (151) den Zugang zu einem Dienst des Anwendungssystems (153) anfordert; und
dem Anwendungssystem (153), das dazu konfiguriert ist, das Benutzergerät mit einem Dienstzugang gemäß dem Benutzergeräteerkennungszeichen zu versehen.

9. Dienstzugangsvorrichtung auf der Basis von WLAN Zugangsauthentifikation, mit:
einem Feststellungsmodul (161), das dazu konfiguriert ist, aus einem ersten Cookie in einem Benutzergerät festzustellen, dass das Benutzergerät eine WLAN-Zugangsauthentifikation durchlaufen hat, wobei das erste Cookie von einem WLAN-Portalserver an das Benutzergerät übertragen wird, das eine WLAN-Zugangsauthentifikation während einer WLAN-Zugangsauthentifikation des Benutzergerätes durchlaufen hat, und wobei das erste Cookie einen Hinweis enthält, dass das Benutzergerät eine WLAN Zugangsauthentifikation durchlaufen hat;
einem Erwerbsmodul (162), das dazu konfiguriert ist, ein Benutzergeräteerkennungszeichen des Benutzergerätes unter Verwendung des ersten Cookies zu erwerben; und
einem ersten Übertragungsmodul (163), das dazu konfiguriert ist, das erworbene Benutzergeräteerkennungszeichen an ein Anwendungssystem zu übertragen.

10. Vorrichtung nach Anspruch 9, wobei das Erwerbsmodul Folgendes aufweist:
eine erste Erwerbseinheit (1622), die dazu konfiguriert ist, eine Benutzergerätekennung von dem ersten Cookie zu erwerben; und
eine zweite Erwerbseinheit (1623), die dazu konfiguriert ist, das Benutzergeräteerkennungszeichen von einer Dienstauthentifikationszentrale der zweiten Ebene anzufordern, der das Benutzergerät gemäß der Benutzergerätekennung zugeordnet ist.

11. Vorrichtung nach Anspruch 9, mit:
einem Speicher- und Übertragungsmodul (164), das dazu konfiguriert ist, die Benutzergerätekennung zu speichern und einen Benutzergerätekennungsindex für die Benutzergerätekennung zuzuweisen, nachdem die Benutzergerätekennung von dem ersten Cookie erworben wird, und ein zweites Cookie, das die Kennung der zugewiesenen Dienstauthentifikationszentrale und den Benutzergerätekennungsindex enthält, an das Benutzergerät zu übertragen.

12. Vorrichtung nach Anspruch 9, wobei das Erwerbsmodul (162) insbesondere dazu konfiguriert ist, eine Anforderung an den WLAN-Portalserver unter Verwendung des ersten Cookies zu übertragen und das Benutzergeräteerkennungszeichen des Benutzergerätes von dem WLAN-Portalserver zu erwerben.

13. Vorrichtung nach Anspruch 9, wobei das Speicher- und Übertragungsmodul (164) ferner dazu konfiguriert ist, das erworbene Benutzergeräteerkennungszeichen des Benutzergerätes zu speichern und eine entsprechende Benutzergeräteerkennungszeichenzahl für jedes Benutzergeräteerkennungszeichen festzulegen; und
das erste Übertragungsmodul (163) ferner dazu konfiguriert ist, die Benutzergeräteerkennungszeichenzahl an das Anwendungssystem zu übertragen und das Benutzergeräteerkennungszeichen entsprechend der Benutzergeräteerkennungszeichenzahl an das Anwendungssystem auf einem mit dem Anwendungssystem eingerichteten, sicheren Übertragungskanal gemäß der Benutzergeräteerkennungszeichenzahl zu übertragen, die von dem Anwendungssystem übertragen wird, um das Benutzergeräteerkennungszeichen anzufordern.

14. Dienstzugangsvorrichtung auf der Basis von WLAN-Zugangsauthentifikation, mit:
einem Erzeugungsmodul (171), das dazu konfiguriert ist, ein erstes Cookie für ein Benutzergerät zu erzeugen, welches eine WLAN-Zugangsauthentifikation während einer WLAN-Zugangsauthentifikation des Benutzergerätes durchlaufen hat, wobei das erste Cookie einen Hinweis enthält, dass das Benutzergerät eine WLAN-Zugangsauthentifikation durchlaufen hat; und
einem zweiten Übertragungsmodul (172), das dazu konfiguriert ist, das erste Cookie an das Benutzergerät zu übertragen, welches eine WLAN-Zugangsauthentifikation durchlaufen hat, wobei das erste Cookie zum Erwerben, durch eine einem Anwendungssystem zugewiesene Dienstauthentifikationszentrale, des Benutzergeräteerkennungszeichens des Benutzergerätes verwendet wird, wenn das Benutzergerät den Zugang zu einem Dienst des Anwendungssystems anfordert.

15. Vorrichtung nach Anspruch 14, weiterhin mit:
einem zweiten Erwerbsmodul (173), das dazu konfiguriert ist, das Benutzergeräteerkennungszeichen in Abhängigkeit einer von einer zugewiesenen Dienstauthentifikationszentrale übertragenen Anforderung zu erwerben; und
einem Speichermodul (174), das dazu konfiguriert ist, eine Tabelle von Benutzergerätekennungen zu konfigurieren und beizubehalten, in welchen Korrespondenzbeziehungen zwischen Benutzergerätekennungsindexen und Benutzergerätekennungen aufgezeichnet sind; und wobei
das zweite Erwerbsmodul (173) Folgendes aufweist:
eine Erkennungserwerbseinheit (1731), die dazu konfiguriert ist, aus der Tabelle von Benutzergerätekennungen eine Benutzergerätekennung entsprechend einem Benutzergerätekennungsindex zu erwerben, der von der zugewiesenen Dienstauthentifikationszentrale gemäß dem Benutzergerätekennungsindex übertragen wird, wobei der Benutzergerätekennungsindex durch die zugewiesene Dienstauthentifikationszentrale von dem ersten Cookie erworben wird; und
eine Zeichenerwerbseinheit (1732), die dazu konfiguriert ist, das Benutzergeräteerkennungszeichen des Benutzergerätes von einer Dienstauthentifikationszentrale der zweiten Ebene anzufordern, welcher das Benutzergerät gemäß der entsprechenden Benutzergerätekennung zugeordnet ist, und das erworbene Benutzergeräteerkennungszeichen an die zugewiesene Dienstauthentifikationszentrale zu übertragen;
das Speichermodul (174) ferner dazu konfiguriert ist, das Benutzergeräteerkennungszeichen zu speichern, und die Tabelle von Benutzergerätekennungen ferner Korrespondenzbeziehungen zwischen Benutzergeräteerkennungszeichen und Benutzergerätekennungen aufweist;
die Kennungserwerbseinheit (1731) ferner dazu konfiguriert ist, in der Tabelle von Benutzergerätekennungen nach der Benutzergerätekennung gemäß einem von der zugewiesenen Dienstauthentifikationszentrale übertragenen Benutzergerätekennungsindex zu suchen, wobei der Benutzergerätekennungsindex durch die zugewiesene Dienstauthentifikationszentrale von dem ersten Cookie erworben wird; und
die Zeichenerwerbseinheit (1732) ferner dazu konfiguriert ist, falls das Benutzergeräteerkennungszeichen entsprechend der Benutzergerätekennung nicht lokal gespeichert wird, das Benutzergeräteerkennungszeichen dann von einer Dienstauthentifikationszentrale der zweiten Ebene anzufordern, welcher das Benutzergerät gemäß der Benutzergerätekennung zugeordnet ist, und das erworbene Benutzergeräteerkennungszeichen lokal zu speichern und an die zugewiesene Dienstauthentifikationszentrale zu übertragen; falls das Benutzergeräteerkennungszeichen entsprechend der Benutzergerätekennung lokal gespeichert wird, das entsprechende Benutzergeräteerkennungszeichen dann an die zugeordnete Dienstauthentifikationszentrale zu übertragen.

## Revendications

1. Procédé d'accès à des services basé sur une authentification d'accès à un réseau local sans fil, WLAN, comportant :
un serveur de portail WLAN transmettant (301, 401, 501, 601, 701, 1001, 1101, 1201, 1301) un premier témoin de connexion à un équipement d'utilisateur qui a réussi une authentification d'accès à un WLAN pendant l'authentification d'accès au WLAN de l'équipement d'utilisateur, dans lequel le premier témoin de connexion comporte une indication que l'équipement d'utilisateur a réussi l'authentification d'accès au WLAN ;
un centre d'authentification de service associé à un système d'application déterminant (302, 402, 502, 602, 702, 1002, 1102, 1202, 1302), à partir du premier témoin de connexion dans l'équipement d'utilisateur qui a réussi l'authentification d'accès au WLAN, que l'équipement d'utilisateur a réussi l'authentification d'accès au WLAN lorsque l'équipement d'utilisateur demande à accéder à un service du système d'application ;
le centre d'authentification de service associé acquérant (303, 703, 1003) un jeton d'identité d'équipement d'utilisateur de l'équipement d'utilisateur en utilisant le premier témoin de connexion ;
le centre d'authentification de service associé transmettant (304, 404, 508, 608, 704, 1004, 1105, 1207, 134) le jeton d'identité d'équipement d'utilisateur acquis au système d'application ; et
le système d'application donnant (305, 405, 509, 609, 706, 1005, 1106, 1208, 1306) à l'équipement d'utilisateur un accès au service en fonction du jeton d'identité d'équipement d'utilisateur.

2. Procédé selon la revendication 1, dans lequel le premier témoin de connexion comporte : une indication de réussite d'authentification d'accès et un identifiant d'équipement d'utilisateur ; et
l'acquisition par le centre d'authentification de service associé d'un jeton d'identité d'équipement d'utilisateur de l'équipement d'utilisateur en utilisant le premier témoin de connexion comporte les étapes consistant à :
acquérir, par le centre d'authentification de service associé, l'identifiant d'équipement d'utilisateur à partir du premier témoin de connexion ; et
demander le jeton d'identité d'équipement d'utilisateur auprès d'un second centre d'authentification de service de second niveau dans lequel se situe l'équipement d'utilisateur en fonction de l'identifiant d'équipement d'utilisateur.

3. Procédé selon la revendication 2, dans lequel si le centre d'authentification de service associé est un centre d'authentification de service de second niveau, alors la requête du jeton d'identité d'équipement d'utilisateur auprès d'un centre d'authentification de service de second niveau dans lequel se situe l'équipement d'utilisateur en fonction de l'identifiant d'équipement d'utilisateur comporte les étapes suivante :
le centre d'authentification de service associé demande le jeton d'identité d'équipement d'utilisateur auprès du centre d'authentification de service de second niveau dans lequel se situe l'équipement d'utilisateur en utilisant le premier témoin de connexion via un centre d'authentification de service de premier niveau ; et dans lequel,
la demande du jeton d'identité d'équipement d'utilisateur auprès du centre d'authentification de service de second niveau dans lequel se situe l'équipement d'utilisateur en utilisant le premier témoin de connexion comporte les étapes consistant à :
recevoir, par le centre d'authentification de service de premier niveau, le premier témoin de connexion transmis à partir du centre d'authentification de service associé ; et
acquérir, par le centre d'authentification de service de premier niveau, l'identifiant d'équipement d'utilisateur à partir du premier témoin de connexion, demander le jeton d'identité d'équipement d'utilisateur auprès du centre d'authentification de service de second niveau dans lequel se situe l'équipement d'utilisateur en fonction de l'identifiant d'équipement d'utilisateur, et transmettre le jeton d'identité d'équipement d'utilisateur et l'identifiant d'équipement d'utilisateur au centre d'authentification de service associé ;
ou comporte les étapes suivantes :
le centre d'authentification de service de premier niveau reçoit l'identifiant d'équipement d'utilisateur transmis à partir du centre d'authentification de service associé, qui est acquis à partir du premier témoin de connexion ; et
le service de premier niveau demande le jeton d'identité d'équipement d'utilisateur auprès du centre d'authentification de service de second niveau dans lequel se situe l'équipement d'utilisateur en fonction de l'identifiant d'équipement d'utilisateur, et transmettre le jeton d'identité d'équipement d'utilisateur au centre d'authentification de service associé.

4. Procédé selon la revendication 2 ou 3, comportant en outre les étapes consistant à :
stocker, par le centre d'authentification de service associé, l'identifiant d'équipement d'utilisateur après l'acquisition de l'identifiant d'équipement d'utilisateur ; et
allouer un indice d'identifiant d'équipement d'utilisateur pour l'identifiant d'équipement d'utilisateur, et transmettre un second témoin de connexion comportant l'identifiant du centre d'authentification de service associé et l'indice d'identifiant d'équipement d'utilisateur à l'équipement d'utilisateur pour remplacer le premier témoin de connexion.

5. Procédé selon la revendication 1, dans lequel l'acquisition par le centre d'authentification de service associé d'un jeton d'identité d'équipement d'utilisateur de l'équipement d'utilisateur en utilisant le premier témoin de connexion comporte l'étape consistant à :
transmettre, par le centre d'authentification de service associé, une requête au serveur de portail WLAN en utilisant le premier témoin de connexion et acquérir le jeton d'identité d'équipement d'utilisateur de l'équipement d'utilisateur auprès du serveur de portail WLAN.

6. Procédé selon la revendication 5, dans lequel le premier témoin de connexion comporte : une indication de réussite d'authentification d'accès et un indice d'identifiant d'équipement d'utilisateur ;
le serveur de portail WLAN configure et met à jour une table d'identifiants d'équipement d'utilisateur dans laquelle une relation de correspondance entre des indices d'identifiant d'équipement d'utilisateur et des identifiants d'équipement d'utilisateur sont enregistrés ; et l'acquisition du jeton d'identité d'équipement d'utilisateur de l'équipement d'utilisateur auprès du serveur de portail WLAN comporte les étapes consistant à :
acquérir, par le serveur de portail WLAN, à partir de la table mise à jour des identifiants d'équipement d'utilisateur, un identifiant d'équipement d'utilisateur correspondant à un indice d'identifiant d'équipement d'utilisateur transmis à partir du centre d'authentification de service associé en fonction de l'indice d'identification d'équipement d'utilisateur, dans lequel l'indice d'identifiant d'équipement d'utilisateur est acquis par le centre d'authentification de service associé à partir du premier témoin de connexion ; et
demander, par le serveur de portail WLAN, le jeton d'identité d'équipement d'utilisateur de l'équipement d'utilisateur auprès d'un centre d'authentification de service de second niveau dans lequel se situe l'équipement d'utilisateur en fonction de l'identifiant d'équipement d'utilisateur correspondant, et transmettre le jeton d'identité d'équipement d'utilisateur acquis au centre d'authentification de service associé ; ou
si le serveur de portail WLAN stocke le jeton d'identité d'équipement d'utilisateur, et que la table d'identifiants d'équipement d'utilisateur comporte en outre des relations de correspondance entre des jetons d'identité d'équipement d'utilisateur et des identifiants d'équipement d'utilisateur, l'acquisition du jeton d'identité d'équipement d'utilisateur de l'équipement d'utilisateur auprès du serveur de portail WLAN comporte les étapes consistant à :
le serveur de portail WLAN recherche dans la table d'identifiants d'équipement d'utilisateur, un identifiant d'équipement d'utilisateur correspondant à un indice d'identifiant d'équipement d'utilisateur transmis à partir du centre d'authentification de service associé en fonction de l'indice d'identifiant d'équipement d'utilisateur, dans lequel l'indice d'identifiant d'équipement d'utilisateur est acquis par le centre authentification de service associé à partir du premier témoin de connexion ; et
si le jeton d'identité d'équipement d'utilisateur correspondant à l'identifiant d'équipement d'utilisateur correspondant n'est pas stocké localement sur le serveur de portail WLAN, alors le serveur de portail WLAN demande le jeton d'identité d'équipement d'utilisateur auprès d'un centre d'authentification de service de second niveau dans lequel se situe l'équipement d'utilisateur en fonction de l'identifiant d'équipement d'utilisateur, et stocke localement et transmet le jeton d'identité d'équipement d'utilisateur acquis au centre d'authentification de service associé ; ou
si le jeton d'identité d'équipement d'utilisateur correspondant à l'identifiant d'équipement d'utilisateur correspondant est stocké localement sur le serveur de portail WLAN, alors le serveur de portail WLAN transmet le jeton d'identité d'équipement d'utilisateur correspondant au centre d'authentification de service associé.

7. Procédé selon la revendication 1, comportant en outre l'étape suivante :
le centre d'authentification de service associé stocke le jeton d'identité d'équipement d'utilisateur acquis de l'équipement d'utilisateur et définit un numéro de jeton d'identité d'équipement d'utilisateur correspondant pour chaque jeton d'identité d'équipement d'utilisateur ; et
la transmission par le centre d'authentification de service associé du jeton d'identité d'équipement d'utilisateur acquis au système d'application comporte les étapes suivantes :
le centre d'authentification de service associé acquiert le numéro de jeton d'identité d'équipement d'utilisateur au système d'application ; et
le centre d'authentification de service associé transmet le jeton d'identité d'équipement d'utilisateur correspondant au numéro de jeton d'identité d'équipement d'utilisateur au système d'application sur un canal de transmission sécurisée établi avec le système d'application en fonction du numéro de jeton d'identité d'équipement d'utilisateur transmis à partir du système d'application pour demander le jeton d'identité d'équipement d'utilisateur.

8. Système d'accès à des services basé sur une authentification d'accès à un réseau local sans fil, WLAN, comportant :
un serveur de portail WLAN (150) configuré pour transmettre un premier témoin de connexion à un équipement d'utilisateur (151) qui a réussi une authentification d'accès à un WLAN pendant une authentification d'accès au WLAN de l'équipement d'utilisateur (151), dans lequel le premier témoin de connexion comporte une indication que l'équipement d'utilisateur a réussi l'authentification d'accès au WLAN ;
un centre d'authentification de service associé (152) configuré pour déterminer, à partir du premier témoin de connexion dans l'équipement d'utilisateur (151) qui a réussi l'authentification d'accès au WLAN, que l'équipement d'utilisateur (151) a réussi l'authentification d'accès au WLAN, acquérir un jeton d'identité d'équipement d'utilisateur de l'équipement d'utilisateur (151) en utilisant le premier témoin de connexion et transmettre le jeton d'identité d'équipement d'utilisateur acquis à un système d'application (153), lorsque l'équipement d'utilisateur (151) demande l'accès à un service du système d'application (153) ; et
le système d'application (153) est configuré pour donner à l'équipement d'utilisateur un accès à un service en fonction du jeton d'identité d'équipement d'utilisateur.

9. Dispositif d'accès à des services basé sur une authentification d'accès à un réseau local sans fil, WLAN, comportant :
un module de détermination (161) configuré pour déterminer à partir d'un premier témoin de connexion dans un équipement d'utilisateur que l'équipement d'utilisateur a réussi une authentification d'accès à un WLAN, dans lequel le premier témoin de connexion est transmis à partir d'un serveur de portail WLAN à l'équipement d'utilisateur qui a réussi l'authentification d'accès au WLAN pendant l'authentification d'accès au WLAN de l'équipement d'utilisateur, et dans lequel le premier témoin de connexion comporte une indication que l'équipement d'utilisateur a réussi l'authentification d'accès au WLAN ;
un module d'acquisition (162) configuré pour acquérir un jeton d'identité d'équipement d'utilisateur de l'équipement d'utilisateur en utilisant le premier témoin de connexion ; et
un premier module de transmission (163) configuré pour transmettre le jeton d'identité d'équipement d'utilisateur acquis à un système d'application.

10. Dispositif selon la revendication 9, dans lequel le module d'acquisition comporte :
une première unité d'acquisition (1622) configurée pour acquérir un identifiant d'équipement d'utilisateur à partir du premier témoin de connexion ; et
une seconde unité d'acquisition (1623) configurée pour demander le jeton d'identité d'équipement d'utilisateur auprès d'un centre d'authentification de service de second niveau dans lequel se situe l'équipement d'utilisateur en fonction de l'identifiant d'équipement d'utilisateur.

11. Dispositif selon la revendication 9, comportant en outre :
un module de stockage et de transmission (164) configuré pour stocker l'identifiant d'équipement d'utilisateur et allouer un indice d'identifiant d'équipement d'utilisateur pour l'identifiant d'équipement d'utilisateur après l'acquisition de l'identifiant d'équipement d'utilisateur à partir du premier témoin de connexion, et pour transmettre un second témoin de connexion comportant l'identifiant du centre d'authentification de service associé et l'indice d'identifiant d'équipement d'utilisateur à l'équipement d'utilisateur.

12. Dispositif selon la revendication 9, dans lequel le module d'acquisition (162) est en particulier configuré pour transmettre une requête au serveur de portail WLAN en utilisant le premier témoin de connexion et pour acquérir le jeton d'identité d'équipement d'utilisateur de l'équipement d'utilisateur auprès du serveur de portail WLAN.

13. Dispositif selon la revendication 9, dans lequel le module de stockage et de transmission (164) est en outre configuré pour stocker le jeton d'identité d'équipement d'utilisateur acquis de l'équipement d'utilisateur et pour définir un numéro de jeton d'identité d'équipement d'utilisateur correspondant pour chaque jeton d'identité d'équipement d'utilisateur ; et
le premier module de transmission (163) est en outre configuré pour transmettre le numéro de jeton d'identité d'équipement d'utilisateur au système d'application et pour transmettre le jeton d'identité d'équipement d'utilisateur correspondant au numéro de jeton d'identité d'équipement d'utilisateur au système d'application sur un canal de transmission sécurisée établi avec le système d'application en fonction du numéro de jeton d'identité d'équipement d'utilisateur transmis à partir du système d'application pour demander le jeton d'identité d'équipement d'utilisateur.

14. Dispositif d'accès à des services basé sur une authentification d'accès à un réseau local sans fil, WLAN, comportant :
un module de génération (171) configuré pour générer un premier témoin de connexion pour un équipement d'utilisateur qui a réussi une authentification d'accès à un WLAN pendant une authentification d'accès au WLAN de l'équipement d'utilisateur, dans lequel le premier témoin de connexion comporte une indication que l'équipement d'utilisateur a réussi l'authentification d'accès au WLAN ; et
un second module de transmission (172) configuré pour transmettre le premier témoin de connexion à l'équipement d'utilisateur qui a réussi l'authentification d'accès au WLAN, dans lequel le premier témoin de connexion est utilisé pour acquérir, par un centre d'authentification de service associé à un système d'application, le jeton d'identité d'équipement d'utilisateur de l'équipement d'utilisateur lorsque l'équipement d'utilisateur demande un accès à un service du système d'application.

15. Dispositif selon la revendication 14, comportant en outre :
un second module d'acquisition (173) configuré pour acquérir le jeton d'identité d'équipement d'utilisateur en réponse à une requête transmise à partir d'un centre d'authentification de service associé ; et
un module de stockage (174) configuré pour configurer et mettre à jour une table d'identifiants d'équipement d'utilisateur dans laquelle des relations de correspondance entre des indices d'identifiant d'équipement d'utilisateur et des identifiants d'équipement d'utilisateur sont enregistrées ; et dans lequel,
le second module d'acquisition (173) comporte :
une unité d'acquisition d'identifiant (1731) configurée pour acquérir à partir de la table d'identifiants d'équipement d'utilisateur un identifiant d'équipement d'utilisateur correspondant à un indice d'identifiant d'équipement d'utilisateur transmis à partir du centre d'authentification de service associé en fonction de l'indice d'identifiant d'équipement d'utilisateur, dans lequel l'indice d'identifiant d'équipement d'utilisateur est acquis par le centre d'authentification de service associé à partir du premier témoin de connexion ; et
une unité d'acquisition de jeton (1732) configurée pour demander le jeton d'identité d'équipement d'utilisateur de l'équipement d'utilisateur auprès d'un centre d'authentification de service de second niveau dans lequel se situe l'équipement d'utilisateur en fonction de l'identifiant d'équipement d'utilisateur correspondant, et pour transmettre le jeton d'identité d'équipement d'utilisateur acquis au centre d'authentification de service associé ;
le module de stockage (174) est en outre configuré pour stocker le jeton d'identité d'équipement d'utilisateur, et la table d'identifiants d'équipement d'utilisateur comporte en outre des relations de correspondance entre des jetons d'identité d'équipement d'utilisateur et des identifiants d'équipement d'utilisateur ;
l'unité d'acquisition d'identifiant (1731) est en outre configurée pour rechercher dans la table d'identifiants d'équipement d'utilisateur l'identifiant d'équipement d'utilisateur en fonction d'un indice d'identifiant d'équipement d'utilisateur transmis à partir du centre d'authentification de service associé, dans lequel l'indice d'identifiant d'équipement d'utilisateur est acquis par le centre d'authentification de service associé à partir du premier témoin de connexion ; et
l'unité d'acquisition de jeton (1732) est en outre configurée pour, si le jeton d'identité d'équipement d'utilisateur correspondant à l'identifiant d'équipement d'utilisateur n'est pas stocké localement, alors demander le jeton d'identité d'équipement d'utilisateur auprès d'un centre d'authentification de service de second niveau dans lequel se situe l'équipement d'utilisateur en fonction de l'identifiant d'équipement d'utilisateur, et stocker localement et transmettre le jeton d'identité d'équipement d'utilisateur acquis au centre d'authentification de service associé ; si le jeton d'identité d'équipement d'utilisateur correspondant à l'identifiant d'équipement d'utilisateur est stocké localement, alors transmettre le jeton d'identité d'équipement d'utilisateur correspondant au centre d'authentification de service associé.
